(19) Europäisches Patentamt
European Patent Office
Office européen des brevets

(11) **EP 3 993 323 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **20204625.6**

(22) Anmeldetag: **29.10.2020**

(51) Internationale Patentklassifikation (IPC):
**H04B 3/02** *(2006.01)*    **H04L 12/28** *(2006.01)*
**H04N 7/10** *(2006.01)*

(52) Gemeinsame Patentklassifikation (CPC):
**H04L 12/2898; H04N 7/106; H04B 3/02**

(54) **VERFAHREN ZUR ÜBERTRAGUNG DIGITALER TEILNEHMERANSCHLUSSSIGNALE ÜBER EIN KOAXIALKABEL, SYSTEM UND SCHNITTSTELLE EINES ENDNUTZERS**

METHOD FOR TRANSMITTING DIGITAL SUBSCIBER SIGNALS OVER A COAXIAL CABLE, SYSTEM AND INTERFACE OF AN END USER

PROCÉDÉ DE TRANSMISSION DE SIGNAUX DE CONNEXION NUMÉRIQUE D'ABONNÉ AU MOYEN D'UN CÂBLE COAXIAL, SYSTÈME ET INTERFACE D'UN UTILISATEUR FINAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.05.2022 Patentblatt 2022/18**

(73) Patentinhaber: **Deutsche Telekom AG**
**53113 Bonn (DE)**

(72) Erfinder:
• **MUGGENTHALER, Peter**
**64397 Modautal (DE)**

• **LÖFFELHOLZ, Marko**
**64347 Griesheim (DE)**
• **TUDZIERS, Christoph**
**64673 Zwingenberg (DE)**
• **LEPPLA, Ralph**
**64404 Bickenbach (DE)**

(74) Vertreter: **Schwöbel, Thilo K. et al**
**Kutzenberger Wolff & Partner**
**Waidmarkt 11**
**50676 Köln (DE)**

(56) Entgegenhaltungen:
**EP-A1- 2 945 360**    **WO-A1-01/43324**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die vorliegende Erfindung betrifft ein Verfahren zur Übertragung digitaler Teilnehmeranschlusssignale über ein Koaxialkabel an eine Schnittstelle eines Endnutzers, wobei das Koaxialkabel einen Gesamtfrequenzbereich aufweist, welcher dazu ausgebildet ist, TV-Signale in einem oberen Frequenzbereich des Gesamtfrequenzbereichs an die Schnittstelle des Endnutzers zu übertragen und Teilnehmeranschlusssignale in einem unteren Frequenzbereich an einen Kundenendgeräte-Ausgang zu übertragen, so dass für den Endnutzer ein störungsfreier Parallelbetrieb von TV- und Teilnehmeranschlusssignalen bei Bezug der Signale über dieselbe Endnutzer-Schnittstelle ermöglicht wird.

Die Erfindung betrifft ferner ein entsprechendes System zur Übertragung digitaler Teilnehmeranschlusssignale über ein Koaxialkabel an eine Schnittstelle eines Endnutzers, wobei das System wenigstens eine Verteilpunkteinheit, distribution point unit, DPU, wenigstens das Koaxialkabel und wenigstens die Schnittstelle mit dem Kundenendgeräte-Ausgang umfasst. Weiterhin betrifft die Erfindung eine Schnittstelle eines Endnutzers, insbesondere als Teil eines erfindungsgemäßen Systems und zur Nutzung in einem erfindungsgemäßen Verfahren.

Aus dem Stand der Technik sind bereits einige Methoden zur Herstellung eines Digital Subscriber Line Access Multiplexer (DSLAM) zum gleichzeitigen Anbieten verschiedener Medien wie TV, Radio und Internet an einem single-point-of-use für den Endnutzer bekannt. Der Stand der Technik kennt insbesondere für eine Integration von TV- bzw. Satelliten (SAT)-Signalen mit IP-Signalen eine "CoaxLAN"-Technologie, bei welchem ein bereits vorhandenes Antennenkabel, welches dem Empfang von SAT-Signalen dient, für eine zur Verfügungstellung von IP-Signalen ohne Beeinträchtigung eines Fernsehempfangs nutzt. Ein Nachteil dieser "CoaxLAN"-Technologie ist u.a., dass eine kontinuierliche Stromversorgung der Antennendose/LAN - auch im Standby Modus - erforderlich ist.

Ein weiterer Nachteil der bekannten "CoaxLAN"-Technologie besteht darin, dass bei der "CoaxLAN"-Technologie ein geteiltes Übertragungsmedium verwendet wird, d.h. ein "Shared Medium", bei dem mehrere Endnutzer Zugriff auf das Übertragungsmedium haben und sich dieses teilen, weil über eine der Antenne nachgeschaltete Einspeiseweiche die für ein Gebäude insgesamt zur Verfügung gestellte Bitraten mit verschiedenen Endnutzern des Gebäudes geteilt werden müssen. Aufgrund der Shared-Medium-Topologie kommt als weiterer Nachteil hinzu, dass defekte Netzwerkstationen die Funktionsfähigkeit aller anderen Netzwerkstationen beeinträchtigen können. Darüber hinaus haben alle Stationen die Möglichkeit, auch auf Datenpakete zugreifen zu können, die keine Adressierung für sie haben, was die Datensicherheit des zur Verfügung gestellten erheblich reduziert.

Die EP 2 945 360 A1 offenbart ein Verfahren zur Übertragung digitaler DSL-Signale über ein Koaxialkabel an eine Schnittstelle eines Endnutzers, wobei das Koaxialkabel einen Gesamtfrequenzbereich aufweist, welcher dazu ausgebildet ist, TV-Signale und/oder Radiosignale in einem oberen Frequenzbereich des Gesamtfrequenzbereichs an die Schnittstelle des Endnutzers zu übertragen.

Die WO 01/43324 A1 bezieht sich auf die Übertragung von Telekommunikationssignalen in zwei Richtungen über eine einzige Übertragungseinrichtung, die in den Räumlichkeiten eines Nutzers, z. B. in einer Wohnumgebung, installiert ist.

Offenbarung der Erfindung

Der Erfindung liegt die Aufgabe zugrunde, ein Verfahren zur Übertragung digitaler Teilnehmeranschlusssignale über ein Koaxialkabel an eine Schnittstelle eines Endnutzers bereitzustellen, wobei das Koaxialkabel einen Gesamtfrequenzbereich aufweist, welcher dazu ausgebildet ist, TV-Signale in einem oberen Frequenzbereich des Gesamtfrequenzbereichs an die Schnittstelle des Endnutzers zu übertragen und in einem unteren Frequenzbereich Teilnehmeranschlusssignale zur Verfügung zu stellen, wobei es das Verfahren in einfacher und effizienter Weise ermöglicht, vergleichsweise breitbandig die Teilnehmeranschlusssignale neben den TV-Signalen zu übertragen. Insbesondere ist es Aufgabe der vorliegenden Erfindung hierbei ein vorhandenes, bereits einer Übertragung von insbesondere TV-Signalen dienendes und zur Schnittstelle eines Endnutzers führendes Koaxialkabel zu verwenden. Ferner liegt der Erfindung die Aufgabe zugrunde, ein entsprechendes System zur Übertragung digitaler Teilnehmeranschlusssignale über ein Koaxialkabel an eine Schnittstelle eines Endnutzers sowie eine Schnittstelle eines Endnutzers bereitzustellen.

Die Aufgabe wird erfindungsgemäß gelöst durch ein Verfahren gemäß Anspruch 1.

Gegenüber dem Stand der Technik hat das erfindungsgemäße Verfahren den Vorteil, dass jeder Endnutzer, z.B. eines Gebäudes, unabhängig von dem Nutzerverhalten anderer Endnutzer des Gebäudes, die maximale bereitgestellte Bandbreite ungeteilt nutzen kann - d.h. diese Bandbreite muss nicht mit den anderen Endnutzern desselben Koaxialkabelsystems geteilt werden.

Dadurch, dass der obere Frequenzbereich für die TV-Signale und der untere Frequenzbereich für die Teilnehmeranschlusssignale überschneidungsfrei sind, ist für den Endnutzer ein ungestörter Parallelbetrieb von TV und Internet möglich.

Erfindungsgemäß werden erste symmetrische (balanced) Teilnehmeranschlusssignale durch eine Verteilpunkteinheit, distribution point unit, DPU, an das Koaxialkabel zur Verfügung gestellt, wobei ein erstes, in Richtung des Kundenendgeräte-Ausgangs gerichtetes, Transformieren der ersten symmetrischen Teilnehmeranschlusssignale in unsymmetrische (unbalanced) Teilnehmeranschlusssignale mittels einer Verteilpunkt-Symmetrierglied-Einrichtung, Balun-Einrichtung, erfolgt. Diese unsymmetrischen Teilnehmeranschlusssignale werden in das Koaxialkabel in einen unteren Frequenzbereich des Gesamtfrequenzbereichs eingekoppelt, wobei der untere Frequenzbereich dem oberen Frequenzbereich überschneidungsfrei unterlagert ist (d.h. oberer und unterer Nutzfrequenzbereich sind getrennt). Erfindungsgemäß findet ferner ein Dämpfen einer Reflexion der unsymmetrische Teilnehmeranschlusssignale in dem mindestens einen Koaxialkabel mittels einer Filtereinrichtung statt sowie ferner ein zweites in Richtung des Kundenendgeräte-Ausgangs gerichtetes Transformieren der unsymmetrischen Teilnehmeranschlusssignale in zweite symmetrische Teilnehmeranschlusssignale mittels einer der Schnittstelle zugeordneten Symmetrierglied-Einrichtung, Balun-Einrichtung. Hierbei erfolgt eine Anpassung der Eingangsimpedanz der Filtereinrichtung hinsichtlich Reflexionen aus Richtung des Kundenendgeräte-Ausgangs.

Symmetrisch (balanced) bedeutet in diesem Zusammenhang, dass zwei gegen Massepotential gleich große gegenphasige Wechselspannungen vorliegen und unsymmetrisch (unbalanced) bedeutet, dass nur eine einzige Wechselspannung gegen Massepotential oder einem Pseudo-Massepotential vorliegt.

Erfindungsgemäß ist es vorgesehen, dass in Gebäuden, die mit einer Koaxial-Sternverkabelung versehen sind, um in den jeweiligen Einzelwohneinheiten insbesondere TV-Signale zur Verfügung stellen zu können, mit einfachen Mitteln zusätzlich auch die Übertragung breitbandiger digitaler Teilnehmeranschlusssignale (insbesondere zur Realisierung einer breitbandigen Internetkonnektivität) realisierbar ist. Breitbandig bedeutet im Rahmen der vorliegenden Erfindung insbesondere digitale Teilnehmeranschlusssignale, die auf einem (Gesamtnutz-)Frequenzbereich von mindestens ca. 100 MHz, bevorzugt jedoch von mindestens ca. 200 MHz, besonders bevorzugt von mindestens ca. 400 MHz übertragen werden. Hierzu ist es erfindungsgemäß vorgesehen, dass die vorhandene Koaxial-Verkabelung zusammen mit einer Endnutzer-Schnittstelle genutzt wird, wobei die Endnutzer-Schnittstelle bzw. Schnittstelle eines Endnutzers einen Kundenendgeräte-Ausgang aufweist, mittels dem die Internetkonnektivität realisierbar ist. Das Übertragungsmedium des Koaxialkabels ist typischerweise in der Lage, Teilnehmeranschlusssignale und TV-Signale bis zu Frequenzen im Bereich von 1 GHz bzw. darüber hinaus zu übertragen. Von diesem Gesamtfrequenzbereich werden die TV-Signale im oberen Frequenzbereich an die Schnittstelle des Endnutzers übertragen und stehen dort zur Nutzung durch den Endkunden als TV-Signale zur Verfügung. Die Teilnehmeranschlusssignale werden als unsymmetrische Teilnehmeranschlusssignale im Koaxialkabel im unteren Frequenzbereich des Gesamtfrequenzbereichs zum Kundenendgeräte-Ausgang übertragen. Hierbei unterlagert der untere Frequenzbereich den oberen Frequenzbereich erfindungsgemäß überschneidungsfrei. Die Schnittstelle eines Endnutzers ist erfindungsgemäß insbesondere als sogenannte Multimedia-Dose (MMD) vorgesehen bzw. realisiert. Die Multimedia-Dose kann beispielsweise mit einer Abdeckung als Einsatz in einem Abdeckrahmen realisiert sein und weist einen Ausgang für TV-Signale sowie den Kundenendgeräte-Ausgang auf. Der Kundenendgeräte-Ausgang wird nachfolgend auch als G.fast-Ausgang bzw. G.fast Port bezeichnet. Der G.fast Port besitzt erfindungsgemäß insbesondere eine geschirmte Cat. 6A RJ45 Buchse zum Anschluss geschirmter handelsüblicher Cat. 5E oder Cat. 6A Patchkabel zum Anschluss eines Modems bzw. einer Modemeinrichtung bzw. einer Routereinrichtung (nachfolgend als G.fast-Modem bezeichnet). Ferner weist die Endnutzer-Schnittstelle bzw. die Multimedia-Dose einen Eingang (IN Port) zum Anschluss des Koaxialkabels auf und einen Ausgang (OUT Port) zur Möglichkeit des Anschlusses einer weiteren TV-Dose über deren Eingang. Typischerweise ist es technisch möglich, an ein einziges (etwa in einer Wohneinheit eines Gebäudes endendes) Koaxialkabel eine Endnutzer-Schnittstelle bzw. Multimedia-Dose und eine oder eine Mehrzahl von TV-Dosen (d.h. Schnittstellen zum Abgriff von TV-Signalen) hintereinandergeschaltet, d.h. seriell, anzuschließen; falls dies der Fall ist, kann bei einer solchen Anordnung die Endnutzer-Schnittstelle bzw. Multimedia-Dose an verschiedenen Positionen angeordnet, d.h. etwa an Position 1, wenn die Endnutzer-Schnittstelle bzw. Multimedia-Dose mittels ihres IN Ports an das Koaxialkabel angeschlossen ist, bzw. an Position 2, wenn es sich um eine Multimedia-Dose handelt, die mittels ihres IN Ports und den Ausgang einer an Position 1 befindlichen TV-Dose angeschlossen ist. Um am Kundenendgeräte-Ausgang bzw. am G.fast Port die Signaldämpfung möglichst gering zu halten, soll die Multimedia-Dose vorzugsweise an Position 1 einer vorhandenen oder neu aufzubauenden TV-Dosen-Installation gesetzt werden. Aufgrund der geringen Auskoppeldämpfung von nur 10,5 dB am TV-Port kann die Multimedia-Dose aber bezogen auf die TV Übertragung (bzw. die TV-Signale) auch universell an verschiedenen Positionen installiert werden. Da die erste und zweite SAT/TV Dose eine Durchgangsdämpfung (Port IN ↔ Port OUT) von etwa 3 dB besitzen, gehen den Teilnehmeranschlusssignalen bzw. G.fast-Signalen an der Position 3 dann aber etwa insgesamt ca. 6 dB bzw. etwas mehr als 6 dB gegenüber der bevorzugten Position 1 verloren, was einem erheblichen Bitratenverlust entspricht. Die reguläre SAT/TV Dose für Position 1 besitzt oft eine Auskoppeldämpfung von ca. 18 dB am TV Port. Eine übliche Staffelung der Auskoppeldämpfungen der SAT/TV Dosen am TV Port kann beispielsweise 18, 14, 10, ... dB betragen. Ziel ist es, dass alle TV Ports bei einer Kaskadierung mehrerer SAT/TV Dosen in Reihe unter Berücksichtigung von deren Durchgangsdämpfungen und der Verbindungskabeldämpfungen etwa den gleichen Ausgangspegel aufweisen. Die letzte Dose muss zur Vermeidung von Reflexionen jeweils mit 75 Ω abgeschlossen werden. Bei einer so genannten TV-Enddose ist ein solcher fest eingebaut.

Erfindungsgemäß ist es vorgesehen, die Teilnehmeranschlusssignale (d.h. im unteren Frequenzbereich) gemäß verschiedener Modi bzw. in verschiedenen Frequenzbereichen über das bzw. mittels des Koaxialkabel(s) zu übertragen. Gemäß einer Variante wird hierfür der Frequenzbereich von ca. 2 MHz bis ca. bzw. bis annähernd 212 MHz zur Übertragung der Teilnehmeranschlusssignale verwendet; dies wird nachfolgend auch als G.fast 212 bezeichnet. Gemäß einer weiteren Variante wird hierfür der Frequenzbereich von ca. 2 MHz bis ca. bzw. bis annähernd 424 MHz zur Übertragung der Teilnehmeranschlusssignale verwendet; dies wird nachfolgend auch als G.fast 424 bezeichnet. Für beide Varianten ist es ferner möglich, diese in einem sogenannten Simplex Modus als Betriebsmodus oder aber in einem sogenannten Duplex-Modus als Betriebsmodus zu betreiben. Im in der Regel verwendeten Simplex-Modus arbeitet die G.fast Technik im Frequenz-Gleichlage und Zeitbereichs-Getrenntlage Verfahren (d.h. mit einer Abfolge eines Sendezeitbereichs, einer Pause und eines Empfangszeitbereichs). Aufgrund des Zeitbereichs-Getrenntlage-Verfahrens spielen Reflexionen von Teilnehmeranschlusssignale (bzw. G.fast Signalen) an den im Signalweg liegenden Ports und Übergängen eine untergeordnete Rolle, solange diese Reflexionen eine gewisse Signalstärke nicht übersteigen, und die Zeitdauer eventueller Mehrfachreflexionen (sogenannte Nachläufersignale) zwischen den Reflexionsstellen die (Sende-Empfangs-) Pause nicht übersteigen, und somit diese Reflexionen nicht in den Empfangszeitbereich der sendenden Seite selbst gelangen. Dann ist nicht damit zu rechnen (bzw. dann kann weitgehend ausgeschlossen werden), dass das Signal-Rausch-Verhältnis (SNR, signal to noise ratio) des jeweiligen Empfängers infolge von zeitgleichen Reflexionen des eigenen Senders reduziert wird. Beim Duplex-Modus arbeitet die G.fast Technik im Frequenz-Gleichlage und Zeitbereichs-Gleichlage Verfahren. Dazu ist eine effiziente Echokompensation und in Verbindung damit eine wesentlich höhere Reflexionsdämpfung aller im Signalweg liegenden Ports und Übergängen der Übertragungskette notwendig. Ansonsten kann das Signal-Rausch-Verhältnis (SNR) und damit die Bitrate des jeweiligen Empfängers infolge von zeitgleichen Reflexionen des eigenen Senders stark reduziert werden. Erfindungsgemäß ist es vorgesehen, dass die Endnutzer-Schnittstelle bzw. insbesondere der Kundenendgeräte-Ausgang sämtliche dieser Betriebsarten bzw. Varianten in der Lage ist zu realisieren bzw. bereitzustellen. Insbesondere ist es erfindungsgemäß vorgesehen, dass der Kundenendgeräte-Ausgang der Endnutzer-Schnittstelle (G.fast Port der MMD) die Anforderungen zur Realisierung der G.fast Duplex 424 Technologie bzw. dieser Betriebsart erfüllt bzw. diese zu realisieren in der Lage ist (insbesondere im Hinblick auf die Reflexionsdämpfung).

Der oben angesprochene Bitratenverlust bei einer Anordnung der Endnutzer-Schnittstelle bzw. Schnittstelle eines Endnutzers (und damit einhergehend des Kundenendgeräte-Ausgangs) nicht an Position 1, sondern an Position 2 bzw. 3 (d.h. mit einer zusätzlichen Durchgangsdämpfung zwischen Port IN und Port OUT (einer Dose an Position 1) von etwa 3 dB bzw. (der Dosen an den Positionen 1 und 2) von zusammen etwa 6 dB) liegt bei den verschiedenen Betriebsarten bzw. Varianten bei ca. 200 Mbit/s (bei 3 dB) bzw. ca. 400 Mbit/s (bei 6 dB) für G.fast 212 (d.h. bei einer Übertragung im unteren Frequenzbereich zwischen ca. 2 MHz bis 212 MHz) und bei ca. 400 Mbit/s (bei 3 dB) bzw. ca. 800 Mbit/s (bei 6 dB) für G.fast 424 (d.h. bei einer Übertragung im unteren Frequenzbereich zwischen ca. 2 MHz bis 212 MHz); im Fall von G.fast 242 Duplex (d.h. bei einer Übertragung im unteren Frequenzbereich zwischen ca. 2 MHz bis 424 MHz im Duplex-Betrieb) wären es noch wesentlich höhere Verluste.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist es vorgesehen, dass die der Schnittstelle zugeordnete Symmetrierglied-Einrichtung eine Drosseleinrichtung und eine Transformatoreinrichtung aufweist, wobei in Richtung des Kundenendgeräte-Ausgangs insbesondere zunächst die Drosseleinrichtung und anschließend die Transformatoreinrichtung durchlaufen wird, wobei die Anpassung der Eingangsimpedanz der Filtereinrichtung (insbesondere hinsichtlich Reflexionen aus Richtung des Kundenendgeräte-Ausgangs) durch eine Kompensationskapazität zwischen der Filtereinrichtung und der der Schnittstelle zugeordneten Symmetrierglied-Einrichtung vorgenommen wird, wobei die Kompensationskapazität insbesondere zwischen der Filtereinrichtung und der Drosseleinrichtung angeordnet ist.

Hierdurch ist es erfindungsgemäß in vorteilhafter Weise möglich, dass eine besonders hohe Reflexionsdämpfung am Kundenendgeräte-Ausgang realisierbar ist, die insbesondere bis zu einer Frequenz von ca. 370 MHz mindestens ca. 22 dB am Kundenendgeräte-Ausgang (bzw. G.fast-Port) und/oder am IN Port betragen muss, insbesondere um auf die spätere Nutzung von G.fast Simplex 424 und G.fast Duplex 212 bzw. G.fast Duplex 424 vorbereitet zu sein.

Gemäß einer weiteren Ausführungsform der vorliegenden Erfindung ist es vorgesehen, dass die Anpassung der Eingangsimpedanz der Filtereinrichtung durch Impedanztransformation dadurch realisiert wird, dass für die Realisierung der Drosseleinrichtung Doppelleitungen mit einem vom Wellenwiderstand des Koaxialkabels verschiedenen Wellenwiderstand verwendet werden, wobei die Impedanztransformation aufgrund einer geringen Länge der Doppelleitungen realisiert wird, wobei insbesondere Doppelleitungen mit einem Wellenwiderstand im Bereich von zwischen 45 $\Omega$ bis 65 $\Omega$, bevorzugt von zwischen 50 $\Omega$ und 60 $\Omega$, insbesondere 55 $\Omega$ verwendet werden.

Hierdurch ist es erfindungsgemäß in vorteilhafter Weise möglich, dass die Anpassung der Eingangsimpedanz der Filtereinrichtung durch Impedanztransformation in besonders einfacher Weise möglich ist.

Gemäß einer weiteren Ausführungsform der vorliegenden Erfindung ist es vorgesehen, dass die Impedanz-Kompensation - insbesondere zusätzlich zur Kompensationskapazität ($C_K$) - mittels der Drosseleinrichtung und der Transformatoreinrichtung vorgenommen wird, wobei die Drosseleinrichtung einen Ringkern und eine Induktivität pro Windung von zwischen 1,0 µH und 1,2 µH, insbesondere etwa 1,1 µH, aufweist und wobei insbesondere der Ringkern mit Draht in Form einer Doppelleitung umwickelt ist, wobei der Draht insbesondere ein mehrfach isolierter Draht ist und insbesondere einen Wellenwiderstand von zwischen 65 Ω und 85 Ω, bevorzugt von zwischen 70 Ω bis 80 Ω, insbesondere von etwa 75 Ω, aufweist.

Gemäß einer weiteren Ausführungsform der vorliegenden Erfindung ist es vorgesehen, dass die Transformatoreinrichtung dazu ausgebildet ist, Impedanzen in einem Bereich von zwischen 65 Ω und 85 Ω, bevorzugt von zwischen 70 Ω bis 80 Ω, insbesondere von etwa 75 Ω in eine Impedanz von zwischen 95 Ω und 105 Ω, insbesondere 100 Ω, zu transformieren.

Gemäß einer weiteren Ausführungsform der vorliegenden Erfindung ist es vorgesehen, dass die Drosseleinrichtung eine Gleichtaktdrossel, Common Mode Choke, ist, wobei die Drosseleinrichtung insbesondere 10 Windungen und eine Common-Mode Induktivität von 110 µH aufweist und/oder wobei die Transformatoreinrichtung Hauptinduktivitäten von 263 µH auf der 75 Ω-Seite und von 353 µH auf der 100 Ω-Seite aufweist.

Gemäß einer weiteren Ausführungsform der vorliegenden Erfindung ist es vorgesehen, dass für eine Mehrzahl von Koaxialkabeln das erste, in Richtung des Kundenendgeräte-Ausgangs gerichtete, Transformieren eine Umwandlung einer Mehrzahl von symmetrischen (balanced) digitalen Teilnehmeranschlusssignalen in eine Mehrzahl von unsymmetrischen (unbalanced) digitalen DSL-Signalen umfasst, wobei die an der Verteilpunkteinheit lokalisierte Verteilpunkt-Symmetrierglied-Einrichtung eine Multi-Symmetrierglied-Einheit ist, wobei insbesondere die Mehrzahl der symmetrischen digitalen Teilnehmeranschlusssignale eine Impedanz in einem ersten Impedanzbereich und die Mehrzahl von unsymmetrischen digitalen Teilnehmeranschlusssignalen eine Impedanz in einem zweiten Impedanzbereich aufweist und/oder

dass das zweite in Richtung des Kundenendgeräte-Ausgangs gerichtete Transformieren eine Umwandlung der unsymmetrischen (unbalanced) digitalen Teilnehmeranschlusssignale mit einer Impedanz im zweiten Impedanzbereich in zweite symmetrische (balanced) Teilnehmeranschlusssignale mit einer Impedanz im ersten Impedanzbereich bewirkt, insbesondere in einem Frequenzbereich zwischen 1 MHz und 222 MHz, bevorzugt zwischen 2 MHz und 212 MHz, oder in einem Frequenzbereich zwischen 1 MHz und 444 MHz, bevorzugt zwischen 2 MHz und 424 MHz, wobei der erste Impedanzbereich im Bereich zwischen 95 Ω und 105 Ω, insbesondere 100 Ω, liegt und der zweite Impedanzbereich im Bereich zwischen 70 Ω und 80 Ω, insbesondere 75 Ω, liegt.

Gemäß einer weiteren Ausführungsform der vorliegenden Erfindung ist es vorgesehen, dass das Einkoppeln der unsymmetrischen Teilnehmeranschlusssignale in das Koaxialkabel mit einer Impedanz im zweiten Impedanzbereich mittels 75 Ω TV 2-fach-Koppler erfolgt, wobei das Koaxialkabel insbesondere Teil einer koaxialen TV Sternstruktur, insbesondere eines Gebäudes, ist.

Gemäß einer weiteren Ausführungsform der vorliegenden Erfindung ist es vorgesehen, dass der untere Frequenzbereich Teilnehmeranschlusssignale bis annähernd 212 MHz umfasst und/oder der obere Frequenzbereich die TV-Signale oberhalb von annähernd 262 MHz umfasst oder dass der untere Frequenzbereich Teilnehmeranschlusssignale bis annähernd 424 MHz umfasst und/oder der obere Frequenzbereich die TV-Signale oberhalb von annähernd 524 MHz umfasst.

Gemäß einer weiteren Ausführungsform der vorliegenden Erfindung ist es vorgesehen, dass am Kundenendgeräte-Ausgang der Schnittstelle eine Eingangs-Reflexionsdämpfung bis mindestens 350 MHz, bevorzugt bis mindestens 370 MHz, von größer oder gleich 22 dB, insbesondere von größer oder gleich 26 dB, insbesondere von größer oder gleich 30 dB, realisiert wird.

Gemäß einer weiteren Ausführungsform der vorliegenden Erfindung ist es vorgesehen, dass die der Schnittstelle zugeordnete Symmetrierglied-Einrichtung eine Unsymmetriedämpfung, Transverse-Conversion-Loss, von wenigstens 25 dB zwischen 2 MHz und 1 GHz realisiert und/oder dass die der Schnittstelle zugeordnete Symmetrierglied-Einrichtung eine S21-Dämpfung, Vorwärts-Transmissionsfaktor, von kleiner als 4 dB zwischen 2 MHz und 1 GHz realisiert und insbesondere eine Dämpfung von kleiner als 1,1 dB zwischen 2 MHz und 424 MHz realisiert.

Hierdurch ist es gemäß einer solchen Ausführungsform der Erfindung vorteilhaft möglich, dass ein besonders guter Schutz gegen Reflexionen gegeben ist.

Des Weiteren wird die Aufgabe gelöst durch ein System gemäß Anspruch 12.

Es ist dadurch gemäß der vorliegenden Erfindung in vorteilhafter Weise möglich, ein zum erfindungsgemäßen Verfahren korrespondierendes erfindungsgemäßes System bereitzustellen, so dass eine Übertragung digitaler Teilnehmeranschlusssignale über ein Koaxialkabel verbessert realisiert werden kann.

Die Aufgabe wird ferner gelöst durch eine Schnittstelle eines Endnutzers gemäß Anspruch 13.

Es ist dadurch gemäß der vorliegenden Erfindung in vorteilhafter Weise möglich, eine zum erfindungsgemäßen Verfahren korrespondierende erfindungsgemäße Schnittstelle eines Endnutzers bereitzustellen und damit eine Übertragung digitaler Teilnehmeranschlusssignale über ein Koaxialkabel zu verbessern.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

Kurze Beschreibung der Figuren

Figur 1    zeigt einen schematischen Aufbau einer Einrichtung oder eines Aufbaus zur Durchführung des erfindungsgemäßen Verfahrens;

Figur 2    zeigt ein Prinzipschaltbild einer Schnittstelle eines Endnutzers (bzw. Endnutzer-Schnittstelle) mit einem Kundenendgeräte-Ausgang und

Figur 3    zeigt ein Schaltbild des Teils der Endnutzer-Schnittstelle, der zum Kundenendgeräte-Ausgang führt, mit einem Tiefpassfilter, einer Symmetrierglied-Einrichtung und dem Kundenendgeräte-Ausgang gemäß einer ersten Ausführungsform der Erfindung.

Figur 4    zeigt Darstellungen zur Eingangsimpedanz der Filtereinrichtung (Tiefpassfilter) aus Richtung der der Schnittstelle zugeordneten Balun-Einrichtung.

Figur 5    zeigt Darstellungen zur Reflexion am Eingang der Filtereinrichtung (Tiefpassfilter) aus Richtung der der Schnittstelle zugeordneten Balun-Einrichtung auch gemäß der ersten Ausführungsform der Erfindung.

Figur 6    zeigt Darstellungen zur kompensierten Eingangsimpedanz der Filtereinrichtung (Tiefpassfilter) aus Richtung der der Schnittstelle zugeordneten Balun-Einrichtung gemäß der ersten Ausführungsform der Erfindung.

Figur 7    zeigt Details einer beispielhaften Ausführungsform der Drosseleinrichtung als Teil der der Schnittstelle zugeordneten Balun-Einrichtung, insbesondere gemäß der ersten Ausführungsform der Erfindung.

Figur 8    zeigt Details einer beispielhaften Ausführungsform der Transformatoreinrichtung als Teil der der Schnittstelle zugeordneten Balun-Einrichtung, insbesondere gemäß der ersten Ausführungsform der Erfindung.

Figur 9    zeigt eine Zielkurve der Dämpfung der Symmetrierglied-Einrichtung (Balun-Dämpfung).

Figur 10   zeigt Zielkurven der Dämpfung der Symmetrierglied-Einrichtung (Balun-Dämpfung).

Ausführungsformen der Erfindung

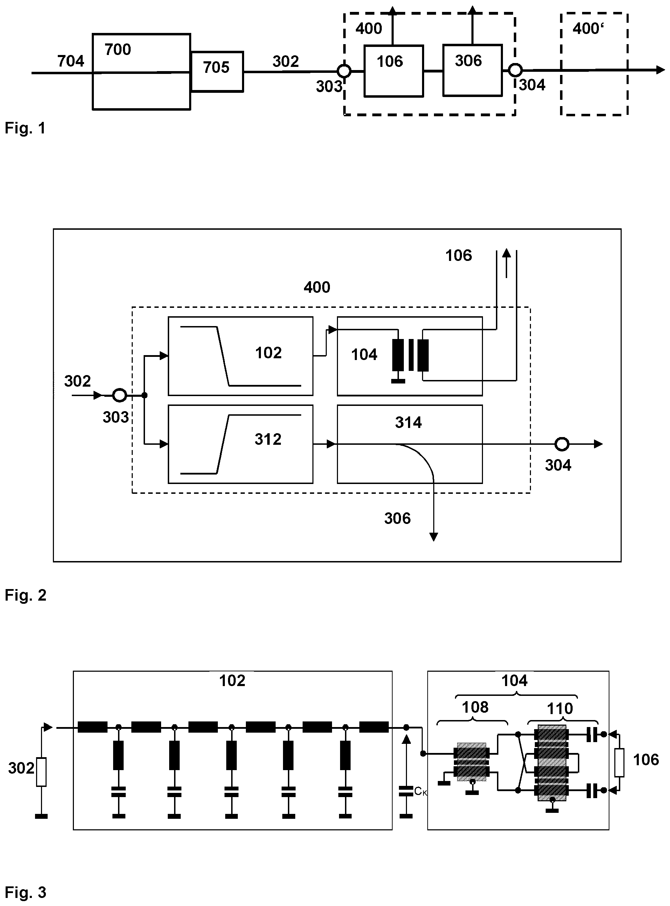

Figur 1 zeigt einen schematischen Aufbau einer Einrichtung oder eines Aufbaus zur Durchführung des erfindungsgemäßen Verfahrens. Zunächst erfolgt ein Zurverfügungstellen von ersten symmetrischen (balanced) Teilnehmeranschlusssignalen über Glasfaserkabel 704 an mindestens ein Koaxialkabel 302 durch eine Verteilpunkteinheit, distribution point unit, DPU, 700. In einer ersten Transformation werden die ersten symmetrischen digitalen Teilnehmeranschlusssignale in unsymmetrische (unbalanced) Teilnehmeranschlusssignale mittels mindestens einer Verteilpunkt-Symmetrierglied-Einrichtung (Balun-Einrichtung) 705 umgewandelt.

Die unsymmetrischen Teilnehmeranschlusssignale werden in das Koaxialkabel in einen unteren Frequenzbereich des Gesamtfrequenzbereichs eingekoppelt, wobei der untere Frequenzbereich dem oberen Frequenzbereich überschneidungsfrei unterlagert ist. Am Ort der Schnittstelle 400 eines Endnutzers (bzw. Endnutzer-Schnittstelle 400) werden die mittels des Koaxialkabels transportierten Teilnehmeranschlusssignale in zweite symmetrische Teilnehmeranschlusssignale transformiert und am Kundenendgeräte-Ausgang 106 (bzw. G.fast Port 106) zur Verfügung gestellt. Das im oberen Frequenzbereich mittels des Koaxialkabels transportierte TV-Signal wird an einem TV-Ausgang 306 der Endnutzer-Schnittstelle 400 zur Verfügung gestellt. Weiterhin sind in Figur 1 noch der Eingang (IN Port) 303 der Endnutzer-Schnittstelle 400 sowie der Ausgang (OUT Port) 304 der Endnutzer-Schnittstelle 400 (zum Anschluss weiterer Endnutzer-Schnittstellen 400 bzw. TV-Dosen) dargestellt.

Die Endnutzer-Schnittstelle 400 ist in Figur 1 als auf Position 1 dargestellt, d.h. es handelt sich um die erste (mittels ihres IN Ports an das betreffende Koaxialkabel 302 angeschlossene) Endnutzer-Schnittstelle bzw. Multimedia-Dose 400. Schematisch ist in Figur 1 ferner auch eine an Position 2 angeordnete Schnittstelle 400' bzw. Dose, welche mit ihrem IN Port (nicht eigens mit Bezugszeichen angegeben) an den OUT Port 304 der Endnutzer-Schnittstelle 400 angeschlossen ist; es handelt sich hierbei jedoch nicht um eine erfindungsgemäße Endnutzer-Schnittstelle 400, sondern lediglich um eine herkömmlich benutzte Dose zum Bereitstellen von TV-Signalen. Diese Möglichkeit schafft jedoch erfindungsgemäß in einfacher Weise die Möglichkeit zur Einbettung der erfindungsgemäßen Endnutzer-Schnittstelle 400 in eine bestehende TV-Wohnungsinstallation. Bei einer solchen Installation mit beispielsweise insgesamt maximal drei seriell (an einem Koaxialkabel 302 angeordneten) Dosen ergeben sich Dämpfungswerte von -10,5 dBr am TV Port (bzw. TV-Ausgang), von -1,5 dBr am G.fast Port (d.h. am Kundenendgeräte-Ausgang 106) und von -3,5 dBr am Out Port. Die Dämpfungen hochwertiger (Koaxial)-Verbindungskabel zwischen den Dosen werden hierbei nicht berücksichtigt, da diese zum einen variabel und zum anderen relativ gering ausfallen (ca. 0,9 dB/10 m/200 MHz; 1,8 dB/10 m/800 MHz). Der Radiobetrieb ist über die Multimedia-Dose 400 und auch die anderen Dosen (400') nicht möglich, da G.fast bis 212/424 MHz betrieben wird. Falls sich die Multimedia-Dose 400 an Position 2 befindet, würden sich die nachfolgenden Dämpfungswerte ergeben: -13,5 dBr am TV Port (bzw. TV-Ausgang), -4,5 dBr am G.fast Port (d.h. am Kundenendgeräte-Ausgang 106) und -6,5 dBr am Out Port. Falls sich die Multimedia-Dose 400 an Position 3 befindet, würden sich die nachfolgenden Dämpfungswerte ergeben: -16,5 dBr am TV Port (bzw. TV-Ausgang), -7,5 dBr am G.fast Port (d.h. am Kundenendgeräte-Ausgang 106) und -9,5 dBr am Out Port.

Die Endnutzer-Schnittstelle 400 ist erfindungsgemäß insbesondere zur Verwendung in Verbindung mit der G.fast-Technik vorgesehen. Generell umfasst die Implementierung der G.fast-Technik die Nutzung einer Zentraleinheit bzw. Verteilpunkteinheit, distribution point unit, DPU, 700. Eine solche G.fast Distribution Point Unit (DPU) 700 weist insbesondere eine Mehrzahl von Ports bzw. Ausgängen (G.fast Ports) auf, beispielsweise 4, 8 oder 16 G.fast Ports. Eine solche G.fast Verteilpunkteinheit 700 (bzw. deren Ports bzw. Ausgänge) ist entsprechend der Darstellung gemäß Figur 1 typischerweise mit einer entsprechenden Anzahl von entsprechenden Modemeinrichtungen bzw. Routereinrichtungen über jeweils ein Koaxialkabel 302 verbunden, d.h. im Beispiel mit 4, 8 oder 16 G.fast Modems, welche typischerweise in den einzelnen Wohnungen (unter Nutzung der jeweiligen Endnutzer-Schnittstelle 400) angeordnet sind. Die DPU bzw. G.fast Verteilpunkteinheit 700 wird an zentraler Stelle eines bspw. Mehrfamilien Gebäudes installiert und mit breitbandiger Internetkonnektivität (typischerweise über Glasfaser) von außen versorgt. Bei Wohngebäuden mit mehr als 16 Wohneinheiten können auch mehrere Verteilpunkteinheit 700 bzw. G.fast Verteilpunkteinheiten installiert werden. Es wird erfindungsgemäß die vorhandene Sternstruktur des TV-Kabelnetzes (Koaxialkabel) als Übertragungsmedium genutzt.

In Figur 2 ist ein Prinzipschaltbild einer Schnittstelle eines Endnutzers 400 (bzw. Endnutzer-Schnittstelle 400) mit dem Kundenendgeräte-Ausgang 106, dem TV-Ausgang 306, dem Eingang (IN Port) 303 und dem Ausgang (OUT Port) 304 dargestellt. Außer dem Teil bzw. außer dem Zweig (umfassend das Tiefpassfilter 102 als Filtereinrichtung 102 und die Symmetrierglied-Einrichtung 104), der zum Kundenendgeräte-Ausgang 106 führt, weist die Endnutzer-Schnittstelle 400 außerdem in einem weiteren Teil bzw. in einem weiteren Zweig ein Hochpassfilter 312 und einen Richtkoppler 314 auf. Mittels des Hochpassfilters 312 werden die TV-Signale ausgefiltert, die zur Weiterleitung an den TV-Ausgang 306 bzw. an den Ausgang (OUT Port 304) der Endnutzer-Schnittstelle 400 vorgesehen sind. Mittels des Richtkopplers 314 werden solche TV-Signale sowohl dem (bzw. am) TV-Ausgang 306 (insbesondere angepasst an einen Wellenwiderstand von 75 Ω und insbesondere mit einer Auskoppeldämpfung von 10,5 dB oder von etwa 10,5 dB) als auch dem (bzw. am) Ausgang, OUT Port 304 (insbesondere ebenfalls angepasst an einen Wellenwiderstand von 75 Ω und insbesondere mit einer Auskoppeldämpfung von 3,5 dB oder von etwa 3,5 dB), zur Verfügung gestellt. Dieser zuletzt beschriebene weitere Zweig der Endnutzer-Schnittstelle 400 wird im Folgenden nicht mehr detailliert beschrieben, da es sich um das übliche Vorgehen in Bezug auf TV-Signale handelt. In Figur 2 ist schematisch auch das Koaxialkabel 302 am Eingang der Endnutzer-Schnittstelle 400 dargestellt.

Im Gegensatz zu herkömmlicherweise bekannten Endnutzer-Schnittstellen bzw. Multimedia-Dosen mit Radio-, TV- und SAT-Buchsen (bzw. -Ausgängen), besitzt die Endnutzer-Schnittstelle 400 (bzw. die Multimedia-Dose 400) erfindungsgemäß - wie oben erwähnt - nur noch einen TV-Ausgang 306 und erfordert damit nur noch einen Richtkoppler 314, der beispielsweise transformatorisch aufgebaut ist. Dessen Eigenschaften entsprechen einem üblichen 1-fach Abzweiger mit etwa 8,8 dB Ausgangskopplung. Das Hochpassfilter 312 könnte beispielsweise mit vier Kreisen aufgebaut sein. Hierbei ist es erfindungsgemäß insbesondere vorgesehen, dass dieses Hochpassfilter in die Reflexionsdämpfung des (vom IN Port 303 aus gesehen parallel geschalteten) Tiefpassfilter 102 mit einbezogen wird und umgekehrt. Nachfolgend sind beispielhaft die Nutzfrequenzbereiche der einzelnen MMD Ports einer Multimedia-Dose 400 angegeben:

| IN Port: | 2 - 864 MHz |
|---|---|
| G.fast Port bei G.fast 212 (G.fast 424): | 2 MHz - 212 MHz (2 MHz - 424 MHz) |
| TV Port bei G.fast 212 (G.fast 424): | 262 MHz - 864 MHz ( 524 - 864 MHz) |
| Out Port bei G.fast 212 (G.fast 424): | 262 MHz - 864 MHz ( 524 - 864 MHz) |

Die Einheiten Tiefpassfilter 102 (bzw. Filtereinrichtung 102), Hochpassfilter 312 und Richtkoppler 314 sind naturgemäß unsymmetrisch bzw. koaxial aufgebaut. Der reguläre Übertragungsmode ist der Gleichtakt ↔ Gleichtakt (Common Mode, nachfolgend auch abgekürzt mit CM), also regulär CM ↔ CM. Die Symmetrierglied-Einrichtung 104 bzw. Balun-Einrichtung 104 wandelt den Gleichtakt in den Gegentakt (Differential Mode, nachfolgend auch abgekürzt mit DM) bzw. umgekehrt, also regulär CM ↔ DM, bzw. DM ↔ CM. Da eine Symmetrierglied-Einrichtung bzw. Balun-Einrichtung eine endliche CM Unterdrückung bezogen auf das Signal der symmetrischen (DM) Seite aufweist, findet hier zusätzlich eine parasitäre und unerwünschte CM ↔ CM Übertragung statt. Diese unerwünschte CM ↔ CM Übertragung im Verhältnis zur erwünschten CM ↔ DM Übertragung wird Unsymmetriedämpfung bzw. Transverse-Conversion-Loss (TCL) - durch die Symmetrierglied-Einrichtung 104 bzw. Balun-Einrichtung 104 hindurch - genannt.

Zum Betrieb der G.fast-Technik ist es erfindungsgemäß insbesondere notwendig, die nachfolgenden Zielfunktionen für die Symmetrierglied-Einrichtung 104 (Balun 104), das Hochpassfilter 312 und das Tiefpassfilter 102 zu erreichen, wobei nachfolgend diese Zielfunktionen für Common Mode (CM) und für Differential Mode (DM) angegeben sind (wobei f in Hz angegeben ist):

Die CM↔DM Zielfunktion der Balun-Dämpfung (Dämpfung der Symmetrierglied-Einrichtung 104) für sich genommen wird wie folgt gefordert:

$$a(f)_{\text{Balun,CM}\leftrightarrow\text{DM}} = -20 * \log\left[\frac{0{,}93}{1 + \left(\frac{f}{960 * 10^6}\right)^2}\right]$$

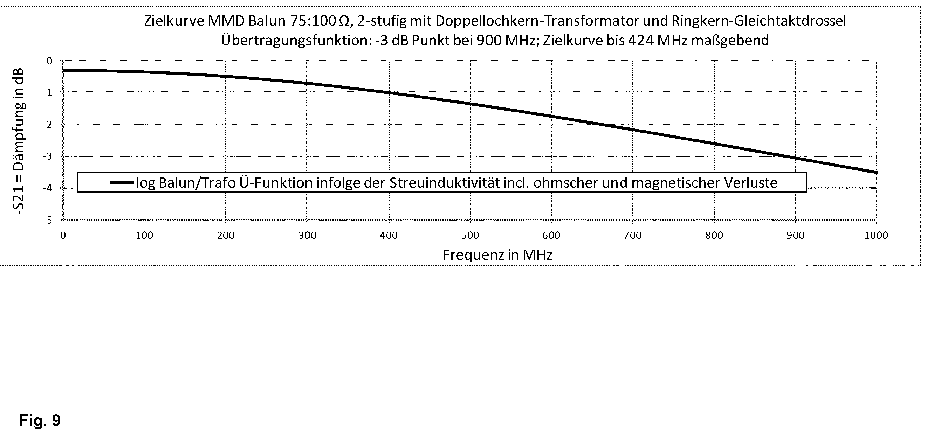

und ist in Figur 9 mittels eines Diagramm wiedergegeben, wobei diese Zielkurve mit einem S-Parameter angegeben ist: Ein negativer S-Parameter entspricht einer positiven Dämpfung. Vereinfachend wird jedoch nachfolgend von Dämpfungen gesprochen.

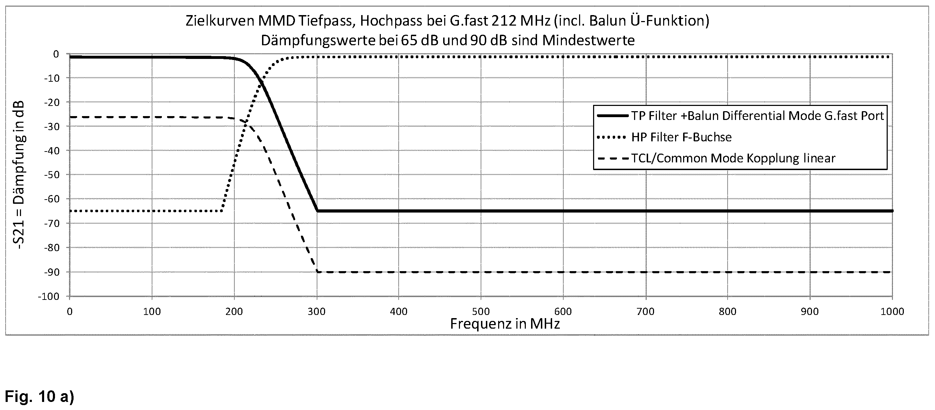

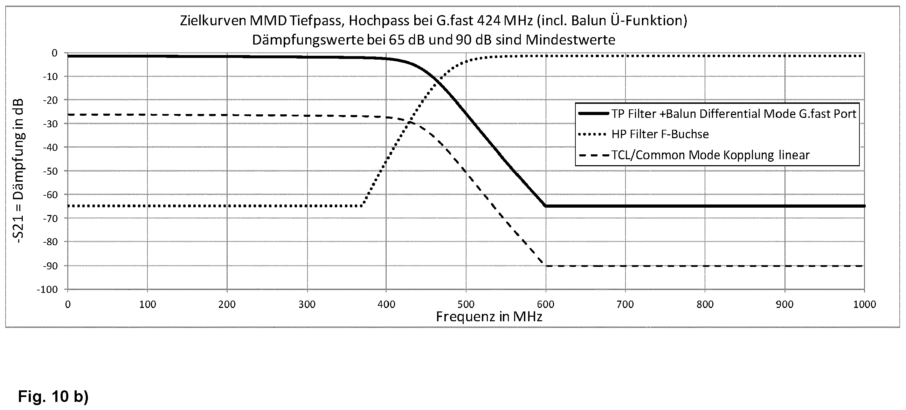

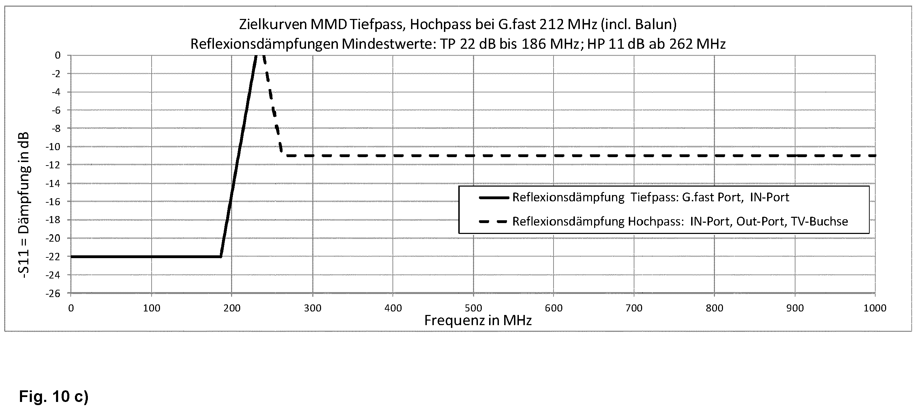

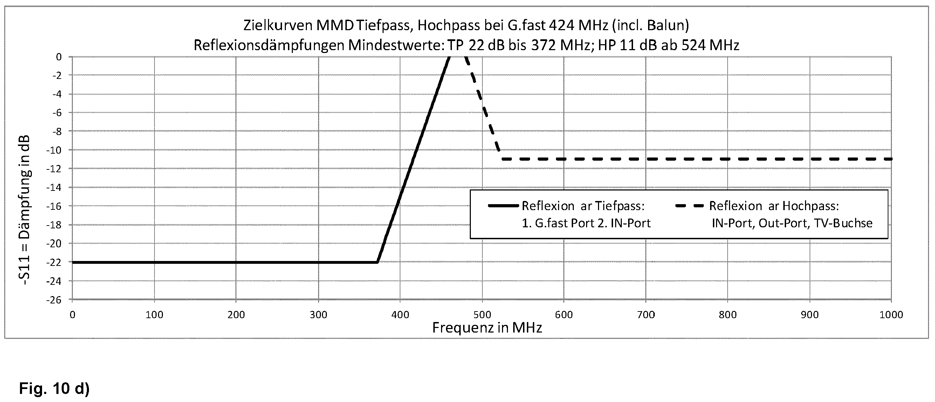

Die nachfolgenden Zielfunktionen sind in den Figuren 10 a) bis 10 d) mittels Diagrammen wiedergegeben: Die CM↔DM Zielfunktion der Tiefpassfilter-Dämpfung für G.fast 212:

$$a(f)_{\text{TP,CM}\leftrightarrow\text{DM}} = \left\{-20 * \log\left[\frac{1}{1 + \left(\frac{f}{225 * 10^6}\right)^{25}}\right] + 1dB\right\}$$

Die CM↔DM Zielfunktion der Tiefpassfilter-Dämpfung incl. Balun für G.fast 212:

$$a(f)_{\text{TP,CM}\leftrightarrow\text{DM}+\text{Balun212}} = \left\{-20 * \log\left[\frac{0{,}93}{\left[1 + \left(\frac{f}{225 * 10^6}\right)^{25}\right] * \left[1 + \left(\frac{f}{960 * 10^6}\right)^2\right]}\right] + 1dB\right\}$$

$$\leq 65dB$$

Die CM Zielfunktion der Hochpassfilter-Dämpfung für G.fast 212:

$$a(f)_{\text{HP,CM212}} \left\{= -20 * \log\left[\frac{1}{1 + \left(\frac{240 * 10^6}{f}\right)^{28}}\right] + 1{,}5dB\right\} \leq 65dB$$

Die CM↔DM Zielfunktion der Tiefpassfilter-Dämpfung incl. Balun für G.fast 424, Simplex/Duplex:

$$a(f)_{\text{TP,CM}\leftrightarrow\text{DM}+\text{Balun424}} = \left\{-20 * \log\left[\frac{0{,}93}{\left[1 + \left(\frac{f}{450 * 10^6}\right)^{25}\right] * \left[1 + \left(\frac{f}{960 * 10^6}\right)^2\right]}\right] + 1dB\right\}$$

$$\leq 65dB$$

Die DM Zielfunktion der Hochpassfilterdämpfung für G.fast 424, Simplex/Duplex:

$$a(f)_{HP,CM\leftrightarrow DM424} = \left\{ -20 * \log\left[\cfrac{1}{1 + \left(\cfrac{480 * 10^6}{f}\right)^{28}}\right] + 1,5dB \right\} \le 65dB$$

Die CM↔CM Zielfunktion der Tiefpassfilterdämpfung incl. Balun für G.fast 212, G.fast 424 Simplex/Duplex:

$$a(f)_{TP,CM\leftrightarrow CM+Balun212} = a(f)_{TP,CM\leftrightarrow DM+Balun212} + 25dB \le 90dB$$

$$a(f)_{TP,CM\leftrightarrow CM+Balun424} = a(f)_{TP,CM\leftrightarrow DM+Balun424} + 25dB \le 90dB$$

Der TCL Offset des Balun entspricht dessen CM↔CM Dämpfung und beträgt mindestens 25 dB. Nachfolgend wird zur Vereinfachung lediglich noch von G.fast 424 (anstelle von G.fast Simplex/Duplex) gesprochen.

Die Zielkurven in den Diagrammen auch der Figur 10 sind als S-Parameter angegeben. Ein negativer S-Parameter entspricht einer positiven Dämpfung. Vereinfachend wird jedoch wiederum von Dämpfungen gesprochen.

Der Balun ist in den Zielfunktionen für den Tiefpass implizit enthalten.

Erfindungsgemäß ist es vorteilhaft möglich, dass die gleiche Ausführung der Symmetrierglied-Einrichtung 104 bzw. Balun-Einrichtung 104 sowohl für G.fast 212 als auch für G.fast 424 vorgesehen wird.

Oberhalb von ca. 500 MHz ist ein welliger Kurvenverlauf von ca. +/- 0,5 dB (bezogen auf die Zielfunktion der TP-Dämpfung) aufgrund Reflexionen infolge der unvermeidbaren Streuinduktivität zu erwarten, aber tolerierbar. Jedoch führen Abweichungen darüber hinaus typischerweise zu unkontrolliertem Übertragungsverhalten, z.B. Resonanzverhalten oder zu geringem TCL. Der TCL Offset von ≥ 25 dB zwischen 2 MHz und 1000 MHz ist erfindungsgemäß insbesondere vom Balun aufzubringen.

Die Zielfunktionen für das Hochpassfilter und für das Tiefpassfilter beschreiben den jeweiligen Verlauf der Diagramme bis zur mindestens geforderten Sperrdämpfung von 65 dB rein mathematisch, um die Kurven der in Figur 10 dargestellten Diagramme zu erhalten (und ebenfalls um die vergleichsweise komplizierte Schreibweise der Fallunterscheidungen zu vermeiden); aus diesem Grund steht die Relation ≤ 65 dB bzw. auch ≤ 90 dB beim Tiefpassfilter.

Bei der physikalischen Ausführung für das Hochpassfilter und für das Tiefpassfilter gilt für die Sperrdämpfung ≥ 65 dB.

Die CM ↔ CM Zielfunktion ist aufgrund des symmetrischen G.fast Ports nur für den Tiefpass-Pfad relevant; es gilt hier, dass die Zielfunktion der CM Dämpfung in der gesamten Bandbreite von 2 MHz - 1000 MHz eine Mindestdämpfung darstellt, beim Tiefpassfilter gilt für die Sperrdämpfung ≥ 90 dB.

Das Hochpassfilter und das Tiefpassfilter werden bis zu den jeweiligen Filterflanken betrieben.

Die 22 dB Reflexionsdämpfung für den Tiefpass-Bereich gelten für den Tiefpassfilter in Verbindung mit dem Balun als Gesamtsystem.

Erfindungsgemäß wird Insbesondere das Tiefpassfilter bis an die Filterflanke heran von dem G.fast Nutzsignal ausgenutzt.

Die insbesondere verwendeten LC-Filter basieren im Sperrbereich auf Totalreflexion und sind hier hochohmig. Diese Reflexion beginnt bereits anzusteigen, bevor die Signaldämpfung an der Flanke merklich zunimmt.

Um noch mehr Tiefpass-Filterkreise und damit einen höheren Produktionsaufwand zu vermeiden, wird der Abfall der Reflexionsdämpfung ab 186 MHz im Fall G.fast 212 bzw. ab 372 MHz im Fall von G.fast 424 bis zu 9 dB bei den Grenzfrequenzen 212 MHz bzw. 424 MHz hingenommen.

Da die in Filtern verwendeten L und C Bauteile auch parasitäre Wirkwiderstandsanteile besitzen, können diese bei entsprechendem Filterdesign die oben angesprochene 9 dB Reflexionsdämpfung auf etwa 10 - 11 dB verschieben.

Im G.fast Simplex Modus sind 9 dB Reflexionsdämpfung kaum ein Problem, weil hier der SNR des G.fast Empfängers wegen des Zeit-Getrenntlage Modus nicht/kaum infolge einer Reflexion belastet werden kann.

Im Duplex Modus ist es dann nur ein relativ schmaler Bereich, der den SNR des G.fast Empfängers beeinträchtigen kann.

Der G.fast Port der MMD wird über ein geschirmtes Cat.5E oder Cat.6A Patchkabel mit dem G.fast Modem verbunden. Versuche zeigen, dass 22 dB Reflexionsdämpfung ausreichen, um die vorhandene Reflexionsdämpfung von 5 m langen Cat.5E und Cat.6A Patchkabel auszuschöpfen. Eine weitere Erhöhung der Reflexionsdämpfung über 22 dB hinaus würde keine zusätzliche Verbesserung der Gesamt-Reflexionsdämpfung am Eingang des Patchkabels auf der Modemseite Richtung MMD bewirken.

In Figur 3 ist ein Schaltbild des Teils der Endnutzer-Schnittstelle 400 gemäß einer ersten Ausführungsform der Erfindung dargestellt, nämlich der Teil bzw. der Zweig, der zum Kundenendgeräte-Ausgang 106 führt. Erkennbar ist nach dem Koaxialkabel 302 (d.h. am Eingang 303, IN Port, der Endnutzer-Schnittstelle 400) die Filtereinrichtung 102 in Form eines Tiefpassfilters 102. An die Filtereinrichtung 102 schließt sich gemäß der ersten Ausführungsform der Erfindung eine Kompensationskapazität $C_K$ an. Weiterhin schließt sich an die Filtereinrichtung 102 bzw. an die Kompensationskapazität $C_K$ eine der Endnutzer-Schnittstelle 400 zugeordnete Symmetrierglied-Einrichtung 104 bzw. Balun-Einrichtung 104 an, wobei diese Symmetrierglied-Einrichtung 104 bzw. Balun-Einrichtung 104 eine Drosseleinrichtung 108 und eine Transformatoreinrichtung 110 aufweist. Die Drosseleinrichtung 108 ist insbesondere als Gleichtakt-Drossel mit 75 Ω Wellenimpedanz ausgebildet. Die Transformatoreinrichtung 110 bewirkt bevorzugt eine Anpassung der Impedanz von 75 Ω zu 100 Ω, so dass am Kundenendgeräte-Ausgang 106 (G.fast Port bzw. G.fast Ausgang 106) eine Wellenimpedanz von 100 Ω vorliegt.

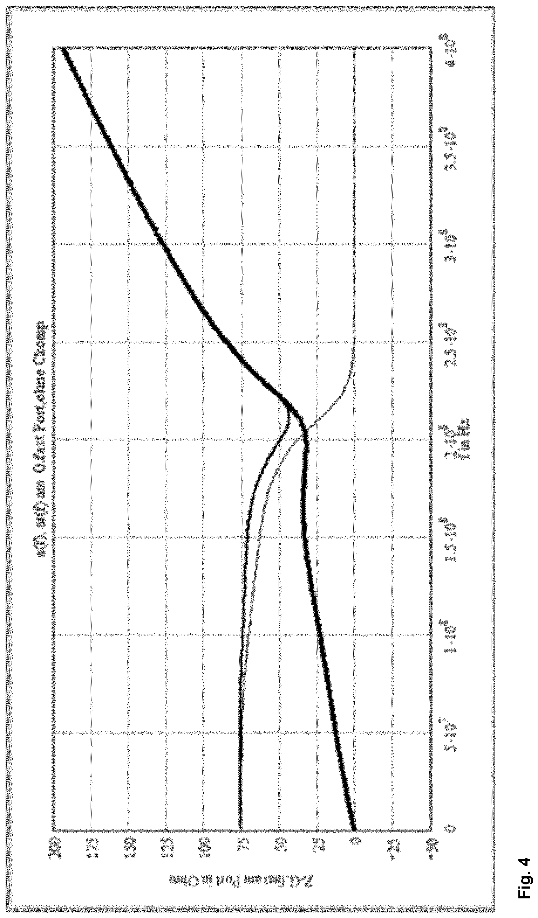

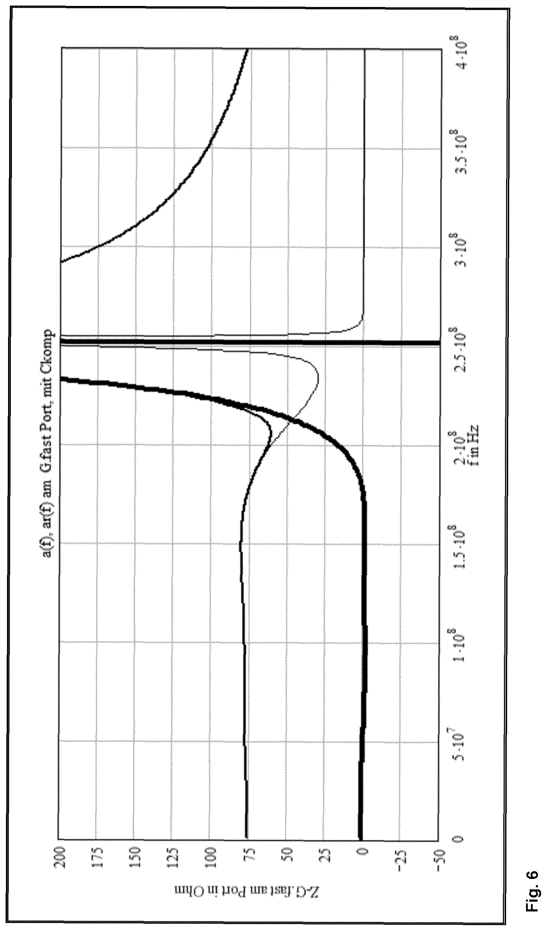

Das Tiefpassfilter 102 ist - wie in Figur 3 schematisch dargestellt - insbesondere in Form einer LC-Filtereinrichtung mit 6 Kreisen vorgesehen bzw. aufgebaut. Im Querzweig werden LC-Reihenresonanzzweige, längs werden Induktivitäten L verwendet (d.h. insbesondere eine Abfolge von sechs in Reihe geschalteter Induktivitäten, sowie fünf weiterer jeweils eine Induktivität und eine Kapazität aufweisende Zweige). Es ist alternativ (nicht in Figur 3 dargestellt) auch möglich, im Querzweig Kapazitäten C, längs Parallelresonanz Sperrzweige (zwischen den Querzweigen) zu verwenden. Diesen beiden Varianten ist gemein, dass - sofern die Kompensationskapazität $C_K$ nicht vorhanden ist - eine jeweils reine Induktivität L am Eingang und am Ausgang des Tiefpassfilters 102 angeordnet ist. Wenn ein solches Tiefpassfilter 102 bzw. eine solche Tiefpassfilteranordnung mit sechs (mindestens aber fünf) Kreisen hinreichend gut abgestimmt ist, zeigt es die Eingangsimpedanz wie in Figur 4 dargestellt. In Figur 4 sind Darstellungen zur Eingangsimpedanz der Filtereinrichtung (Tiefpassfilter 102) aus Richtung der der Schnittstelle zugeordneten Balun-Einrichtung - ohne Vorhandensein der Kompensationskapazität $C_K$ - schematisch dargestellt. Die Abszisse der Darstellung entspricht der Frequenz in Hz und die Ordinate entspricht verschiedenen Widerstandswerten in Ω. Die bei kleinen Frequenzen bei 75 Ω startende und bei großen Frequenzen bei 0 Ω endende mit dünner Linie gezeichnete Kurve entspricht dem Realteil der Eingangsimpedanz der Filtereinrichtung. Die bei kleinen Frequenzen bei 0 Ω startende und bei großen Frequenzen bei etwa 200 Ω endende mit dicker Linie gezeichnete Kurve entspricht dem rein induktiven Blindteil der Eingangsimpedanz der Filtereinrichtung; dieser steigt kontinuierlich bis etwa 160 MHz an, was zusammen mit dem etwas fallenden Realteils mit dem kontinuierlichen Anstieg der Reflexion korrespondiert (dieser rein induktive Blindteil kann wirksam kompensiert werden, was in Figur 6 dargestellt ist). Die bei kleinen Frequenzen bei 75 Ω startende und sich bei großen Frequenzen der zuvor erwähnten mit dicker Linie gezeichneten Kurve annähernde Kurve entspricht dem Betrag aus Real- und Imaginärteil der Eingangsimpedanz der Filtereinrichtung.

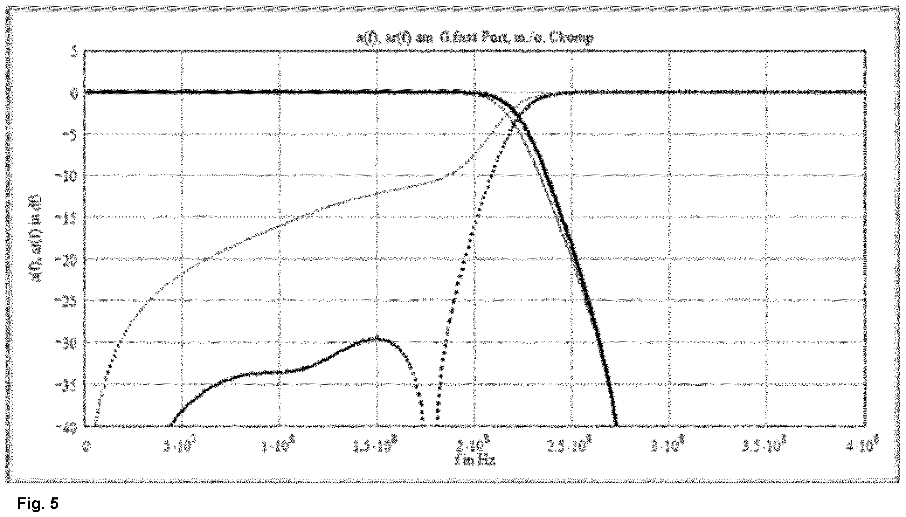

Mittels der Kompensationskapazität $C_K$ ist es gemäß der ersten Ausführungsform erfindungsgemäß mit vergleichsweise einfachen Mitteln möglich, dass eine Anpassung der Eingangsimpedanz der Filtereinrichtung 102 hinsichtlich Reflexionen aus Richtung des Kundenendgeräte-Ausgangs 106 realisierbar ist. Dies ist in Figur 5 schematisch dargestellt. In Figur 5 sind Darstellungen zur Reflexion am Eingang der Filtereinrichtung (Tiefpassfilter) aus Richtung der der Schnittstelle zugeordneten Balun-Einrichtung mit und ohne die Kompensationskapazität $C_K$ abgebildet. Die Abszisse der Darstellung entspricht der Frequenz in Hz und die Ordinate entspricht verschiedenen Dämpfungswerten in dB. Die kontinuierlich von kleinen Frequenzen zu großen Frequenzen hin ansteigende dünn punktierte Kurve entspricht den S11-Reflexionen für den Fall, dass keine Kompensationskapazität $C_K$ vorhanden ist. Dieser Situation entspricht auch die bei kleinen Frequenzen bei 0 dB startende und bei etwa 270 MHz bei -40 dB liegende ebenfalls dünn punktierte (untere) Durchgangskurve. Hingegen entspricht die ebenfalls bei kleinen Frequenzen (bis etwa 150 MHz) ansteigende dicker punktierte Kurve den S11-Reflexionen für den Fall, dass die Kompensationskapazität CK vorhanden ist. Dieser Situation (d.h. mit der Kompensationskapazität CK) entspricht auch die bei kleinen Frequenzen bei 0 dB startende und bei etwa 270 MHz bei -40 dB liegende ebenfalls dick punktierte (obere) Durchgangskurve; somit profitiert auch die Signaldämpfung von der Wirkung der Kompensationskapazität $C_K$.

Wird dagegen eine ungünstige Tiefpass Filterabstimmung gewählt, bei der der Blindteil der Eingangsimpedanz relativ stark ist und bis zur Tiefpass-Filterflanke mehrfach von induktiv in kapazitiv wechselt, äußert sich das auch in einem welligen und unstetigen Signaldämpfungsverlauf. Dieser ist ein Zeichen ungünstiger Abstimmung.

In Figur 6 sind Darstellungen zur kompensierten Eingangsimpedanz der Filtereinrichtung (Tiefpassfilter) 102 aus Richtung der der Schnittstelle 400 zugeordneten Balun-Einrichtung gemäß der ersten Ausführungsform der Erfindung abgebildet. Die Abszisse der Darstellung entspricht der Frequenz in Hz und die Ordinate entspricht verschiedenen Widerstandswerten in Ω. Die bei kleinen Frequenzen bei 0 Ω startende und bei etwas oberhalb von 250 MHz zu niedrigen Widerstandswerten verschwindende mit dicker Linie gezeichnete Kurve entspricht dem induktiven Blindteil der Eingangsimpedanz: Bei entsprechender Wahl der Kompensationskapazität CK verschwindet dieser induktive Blindteil bis etwa 180 MHz nahezu vollständig; danach steigt er resonanzartig an und fällt oberhalb von 250 MHz ins kapazitive. Die mit mitteldicker Linie gezeichnete Kurve zeigt, dass der Impedanz Betrag oberhalb von 250 MHz in Richtung "Kurzschluss" fällt. Dies ist jedoch kein Problem, weil das sendende G.fast Modem ab ca. 250 MHz lediglich noch eine spektrale Leistungsdichte (PSD, power spectral density) von < -120 dBm/Hz hat und das Tiefpassfilter 102 auf der gegenüberliegenden Seite (d.h. am IN Port 303) ebenfalls eine vergleichbare Reflexionsdämpfung wie in Figur 5 aufweist (s. dort die dicker punktierte Kurve der S11-Reflexionen für den Fall, dass die Kompensationskapazität $C_K$ vorhanden ist). Außerdem ist zu sehen, dass infolge der Blindanteilkompensation der Realteil bis etwa 200 MHz wieder gestiegen ist; dies korrespondiert mit der Kurve der nun geringeren Signaldämpfung in Figur 5 (die bei kleinen Frequenzen bei 0 dB startende und bei etwa 270 MHz bei -40 dB liegende dick punktierte obere Durchgangskurve).

Es ist somit erfindungsgemäß gemäß der ersten Ausführungsform vorteilhaft möglich, eine Kompensationskapazität zu verwenden, um eine Erhöhung der Reflexionsdämpfung zu realisieren: Mit einer geeigneten Filterabstimmung des Tiefpassfilters 102, die einen kontinuierlichen Anstieg des induktiven Blindanteils, und einen leichten Abfall des Realteils der Eingangsimpedanz ähnlich wie in Figur 4 aufweist, gelingt mit der Kompensationskapazität $C_K$ (gemäß der Darstellung nach Figur 3) die Erhöhung der Reflexionsdämpfung im Nutzbereich effizient und auf sehr einfache Weise. Davon profitiert auch die geringere Signaldämpfung. Diese Kompensation bedingt typischerweise, dass die Wellenimpedanz der Doppelleitung in der Drosseleinrichtung 108 (CM Drossel) etwa 75 Ω aufweist.

Gemäß einer zweiten Ausführungsform ist es erfindungsgemäß vorgesehen, dass die Anpassung der Eingangsimpedanz der Filtereinrichtung 102 hinsichtlich Reflexionen aus Richtung des Kundenendgeräte-Ausgangs 106 dadurch erfolgt, dass für die Realisierung der Drosseleinrichtung 108 Doppelleitungen mit einem vom Wellenwiderstand des Koaxialkabels 302 verschiedenen Wellenwiderstand verwendet werden. Insbesondere kann die Impedanztransformation aufgrund einer geringen Länge der Doppelleitungen realisiert wird, wobei insbesondere Doppelleitungen mit einem Wellenwiderstand im Bereich von zwischen 45 Ω bis 65 Ω, bevorzugt von zwischen 50 Ω und 60 Ω, insbesondere 55 Ω verwendet werden. Hierdurch wird somit (gegenüber der ersten Ausführungsform mit Verwendung einer Kompensationskapazität $C_K$) eine weitere Methode zur Verfügung gestellt, den induktiven Anstieg der Tiefpassfilter Eingangsimpedanz zu zumindest in einem relativ schmalen Frequenzbereich erfolgreich zu kompensieren. Insbesondere ist es erfindungsgemäß gemäß der zweiten Ausführungsform vorgesehen, dass zur Herstellung der Wicklungen von Richtkopplern, Transformatoren und CM Drosseln lackisolierte Drähte verschiedener Dicke verwendet werden. Für die CM Drossel werden insbesondere regulär verdrillte Doppelleitungen aus diesem Lackdraht verwendet, die durch einen Ringkern oder Doppellochkern gewickelt werden. Diese Doppelleitungen aus Lackdraht besitzen entsprechend ihrer Geometrie einen Wellenwiderstand im Bereich von ca. 55 Ω. Da diese Doppelleitung nicht mit ihrem Wellenwiderstand abgeschlossen ist, sondern mit einem höheren dessen Betrag um 75 Ω liegt, findet hier aufgrund der Länge dieser Doppelleitung eine Impedanz-Transformation statt. Aufgrund dieser findet ein Wechsel von kapazitivem und induktiven Verhalten statt. Das kapazitive Verhalten dieser Doppelleitung im ersten Frequenzbereich kann nun genutzt werden, um den induktiven Anteil der Tiefpassfilter-Eingangsimpedanz zu kompensieren. Bei höheren Frequenzen wie bei G.fast 212 und G.fast 424 wird eine gezielte ImpedanzTransformation verwendet, die genauso transformiert, dass der Verlauf des induktiven Anstiegs aufgehoben wird. Um eine ausreichenden CM Dämpfung zu realisieren, muss eine bestimmte Mindestlänge der Doppelleitung genutzt werden. Darüber hinaus muss versucht werden, die Eingangsimpedanz des Tiefpassfilters so abzustimmen, dass sie möglichst zur Kompensationsfähigkeit einer Impedanz-Transformation passt.

Erfindungsgemäß ist es insbesondere vorgesehen, dass die Symmetrierglied-Einrichtung 104 bzw. Balun-Einrichtung 104 zweistufig aufgebaut ist, d.h. die Drosseleinrichtung 108 - insbesondere in Form einer CM Drossel auf der unsymmetrischen Seite - und die Transformatoreinrichtung 110 auf der symmetrischen Seite aufweist.

Alternativ zu einem solchen Aufbau der Balun-Einrichtung 104 - mit der Drosseleinrichtung 108 auf der unsymmetrischen Seite und der Transformatoreinrichtung 110 auf der symmetrischen Seite - ist es erfindungsgemäß auch möglich, die Positionen der CM Drossel und des Transformators zu tauschen, was jedoch in der Regel Probleme bei der Reflexionsdämpfung aufgrund der Fehlanpassung der CM Drossel verursacht: Es wären hier (d.h. auf der symmetrischen Seite) 100 Ω Wellenimpedanz notwendig, der verwendete Lackdraht bietet aber lediglich ca. 55 Ω.

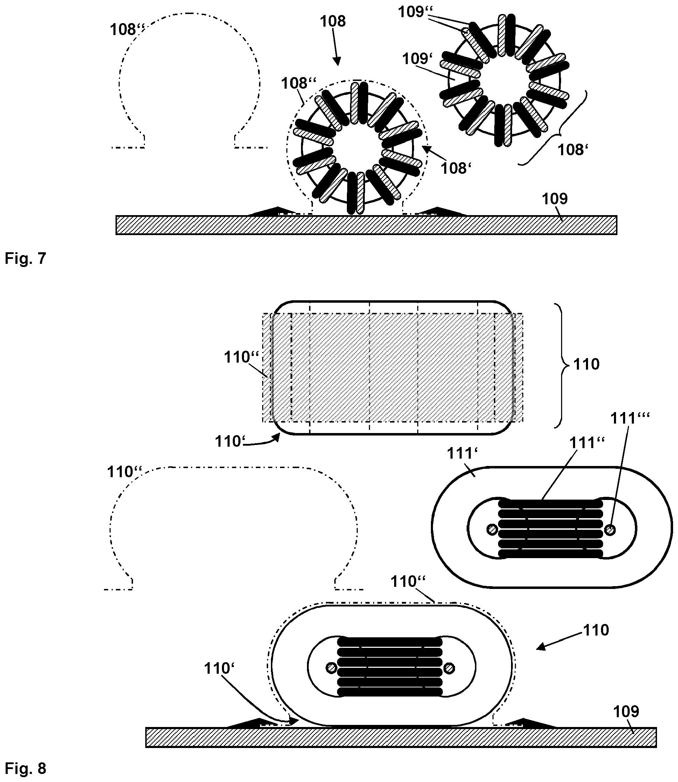

Erfindungsgemäß ist die Symmetrierglied-Einrichtung 104 bzw. Balun-Einrichtung 104, bzw. deren Komponenten, insbesondere gemäß der schematischen und beispielhaften Darstellungen in Figur 7 und 8 aufgebaut bzw. realisiert - insbesondere mit Bezug zur ersten Ausführungsform.

Figur 7 stellt beispielhaft eine Ausführungsform der Drosseleinrichtung 108 in ihrer Einbausituation auf einer Leiterplatte 109 oder Platine 109 sowie unabhängig davon sowohl das Innere 108' der Anordnung der Drosseleinrichtung 108 als auch deren Umhüllung 108" schematisch dar. Im rechten oberen Teil der Figur 7 ist das Innere 108' der Drosseleinrichtung 108, d.h. der mit Leitungswicklungen 109" umwickelte Ringkern 109' der Drosseleinrichtung 108 dargestellt. Im linken oberen Teil der Figur 7 ist die Umhüllung 108" der Drosseleinrichtung 108 dargestellt. Im mittleren unteren Teil der Figur 7 ist die Drosseleinrichtung 108 in ihrer Einbausituation dargestellt, wobei die Umhüllung 108" mit der Leiterplatte 109 bzw. mit Masse kontaktiert ist, beispielsweise aufgelötet bzw. in sonstiger Weise verbunden. Die Drosseleinrichtung 108 umfasst hierbei das Innere 108' der Anordnung (d.h. die Leitungswicklungen 109" und den Ringkern 109') und die Umhüllung 108" auf. Die die Leitungswicklungen 109' bildende Leitung bzw. der Draht bzw. der verwendete Lackdraht (insbesondere mehrfach isoliert) ist in Form einer Doppelleitung vorgesehen (d.h. mit Hin- und Rückrichtung in derselben Windung bzw. Wicklung, was in Figur 7 mit unterschiedlicher Schraffierung verschiedener Teile der Leitungswicklung 109" angedeutet ist). Erfindungsgemäß ist es hierdurch vorteilhaft möglich, dass die Vorteile einer hohen Reflexionsdämpfung, einer sehr geringen Dämpfung ohne Resonanzeffekte und einer hohen Symmetrie bis etwa 1 GHz in Kombination realisiert werden können, wenn die Drosseleinrichtung 108 (insbesondere als CM Drossel realisiert) insbesondere einen Ringkern der Größe $D_a$ = 6,3 mm; $D_i$ = 3,8 mm; L = 2,5 mm (Außendurchmesser, Innendurchmesser bzw. Länge) sowie eine Induktivität pro Windung (AL) von ca. 1,1 $\mu$H aufweist. Es werden insbesondere stark verdrillte (beispielsweise mit einer Verdrillungslänge bzw. Schlaglänge von etwa dem fünffachen des Durchmessers der Doppelader bzw. von etwa dem zehnfachen des Durchmessers der Einzelader) Doppelleitungen mit einer Wellenimpedanz von ca. 75 $\Omega$ (Mehrfach isolierte Drähte) verwendet, mit ca. 10 Windungen in gleichem Abstand und in lediglich einer Lage. Ferner wird die CM Drossel erfindungsgemäß bevorzugt mittels eines Omega-förmigen Kupferbandes als Umhüllung 108" umhüllt, das auf die Kupferkaschierung der Platine 109 beispielsweise gelötet wird. Der Abstand der Umhüllung und die Breite muss experimentell ermittelt werden.

Figur 8 stellt beispielhaft eine Ausführungsform der Transformatoreinrichtung 110 in ihrer Einbausituation auf einer Leiterplatte 109 oder Platine 109 sowie unabhängig davon sowohl das Innere 110' der Anordnung der Transformatoreinrichtung 110 als auch deren Umhüllung 110" und eine Draufsicht schematisch dar. Im rechten Teil der Figur 8 ist das Innere 110' der Transformatoreinrichtung 110, d.h. der mit der inneren Wicklung 111" und der äußeren Wicklung 111''' umwickelte Doppellochkern 111' der Transformatoreinrichtung 110 dargestellt. Im linken Teil der Figur 8 ist die Umhüllung 110" der Transformatoreinrichtung 110 dargestellt. Im mittleren unteren Teil der Figur 8 ist die Transformatoreinrichtung 110 in ihrer Einbausituation dargestellt, wobei die Umhüllung 110" mit der Leiterplatte 109 bzw. mit Masse kontaktiert ist, beispielsweise aufgelötet bzw. in sonstiger Weise verbunden. Im oberen Teil der Figur 8 ist eine Draufsicht auf die Transformatoreinrichtung 110, umfassend das Innere 110' der Transformatoreinrichtung 110 und die Umhüllung 110" der Transformatoreinrichtung 110, dargestellt. Insbesondere weist die Transformatoreinrichtung 110 erfindungsgemäß einen Doppellochkern 111' der Größe B = 6,9 mm; H = 3 mm; L = 6 mm; sowie eine Induktivität pro Windung (AL) von ca. 7,3 $\mu$H auf. Jeweils eine halbe Windung im linken Loch und eine halbe Windung im rechten Loch des Doppellochkerns 111' bilden die äußere Wicklung 111''', 6 Windungen bilden die innere Wicklung 111". Dadurch entsteht ein Windungsverhältnis von 6:7, entsprechend 75: 102 $\Omega$. Die Transformatoreinrichtung 110 weist erfindungsgemäß insbesondere ferner eine sehr dichte, unmittelbare Umhüllung der Anordnung aus Doppellochkern 111' und Wicklungen 111", 111''' mithilfe eines breiten Omega-förmigen Kupferbandes auf, das insbesondere auf die Kupferkaschierung der Platine gelötet wird (oder in anderer Weise kontaktiert wird), wobei bevorzugt kein Abstand zum Doppellochkern 111' bestehen soll.

Die Kupferumhüllungen 108', 110' erhöhen die CM Dämpfung bzw. den TCL der Balun-Einrichtung 104 über die kapazitive Ableitung des CM Signals.

Die Kontaktierung des Mittelpunktes der inneren Wicklung 111" des Transformators 110 (bzw. der Transformatoreinrichtung 110) bewirkt bei tieferen Frequenzen eine Erhöhung des TCL, jedoch bei höheren Frequenzen eine Verringerung.

Da eine möglichst hohe Dämpfung gegenüber der befürchteten Einstrahlung von LTE-Signalen (d.h. von Signalen gemäß dem Mobilfunkstandard der vierten Generation bzw. LTE, Long Term Evolution) notwendig ist, soll die innere Wicklung erfindungsgemäß bevorzugt nicht gegen Masse gelegt werden. Da im Bereich der TV-Kanäle bis 864 MHz zwei LTE-Frequenzbänder liegen (694 - 790 MHz und 791 - 862 MHz) werden erfindungsgemäß Schirmungsmaßnahmen innerhalb der Endnutzer-Schnittstelle 400 bzw. Multimedia-Dose vorgesehen: Damit die Einzeldämpfungen der Balun-Einrichtung 104 sowie der Tiefpass- und HochpassFilter nicht infolge von CM-Übersprechen zwischen den einzelnen Modulen zunichte gemacht wird, ist bevorzugt zumindest die Balun-Einrichtung 104 von den anderen drei Modulen mittels Schirmblech gegenüber Hochfrequenz-Signalen komplett zu trennen. Erfindungsgemäß ist es optional ferner vorgesehen, weitere Schirmungen in der Endnutzer-Schnittstelle 400 bzw. Multimedia-Dose anzuordnen.

Insgesamt ist es erfindungsgemäß somit möglich, auch erhöhte Anforderungen an die vergleichsweise große Nutzbandbreite (bis zu 424 MHz) der Balun-Einrichtung 104 bei einer Dämpfung von max. 1,1 dB bei 424 MHz zu erfüllen und eine gegenüber herkömmlicherweise bekannten Technologien steilere LC-Hochpassfilter-Charakteristik sowie Tiefpassfilter-Charakteristik zu realisieren, die aufgrund der schmalen Frequenzlücke zwischen den G.fast-Nutzsignalen (d.h. den Teilnehmeranschlusssignalen) einerseits und dem ersten TV Kanal andererseits bis an die jeweiligen Filterflanken heran betrieben werden müssen. Erfindungsgemäß wird ferner in vorteilhafter Weise eine hohe Symmetriedämpfung bis 1 GHz wegen einer hohen Einstrahlfestigkeit gegenüber LTE bei 700 MHz und 800 MHz erzielt sowie eine Reflexionsdämpfung, die bis ca. 370 MHz mindestens 22 dB am G.fast-Port und am IN Port beträgt, um der Nutzung von G.fast Simplex 424 und G.fast Duplex 424 zugänglich zu sein.

Erfindungsgemäß wird außerdem in vorteilhafter Weise die geforderte Reflexionsdämpfung und die Linearität der G.fast Schnittstelle realisiert, um das gegenüber einer Kupferdoppelader wesentlich höhere, vorhandene Potential der koaxialen Sternkabelstruktur ausschöpfen zu können.

Der technische Aufwand, insbesondere für die Balun-Einrichtung 104 und das Tiefpassfilter 102 ist bei dem erfindungsgemäß geforderten bzw. vorgeschlagenen Filterdesign und der angegebenen Maßnahmen, beispielsweise zur Sicherstellung der Reflexionsdämpfung und der Symmetrie, vergleichsweise gering.

**Patentansprüche**

1. Verfahren zur Übertragung digitaler Teilnehmeranschlusssignale über ein Koaxialkabel (302) an eine Schnittstelle (400) eines Endnutzers, wobei das Koaxialkabel (302) einen Gesamtfrequenzbereich aufweist, welcher dazu ausgebildet ist, TV-Signale in einem oberen Frequenzbereich des Gesamtfrequenzbereichs an die Schnittstelle (400) des Endnutzers zu übertragen, wobei die Schnittstelle (400) einen Kundenendgeräte-Ausgang (106) umfasst, wobei das Verfahren die folgenden Schritte umfasst:

   -- ein Zurverfügungstellen von ersten symmetrischen (balanced) Teilnehmeranschlusssignalen durch eine Verteilpunkteinheit, distribution point unit, DPU, (700) an das Koaxialkabel (302) mit einem ersten, in Richtung des Kundenendgeräte-Ausgangs (106) gerichteten, Transformieren der ersten symmetrischen Teilnehmeranschlusssignale in unsymmetrische (unbalanced) Teilnehmeranschlusssignale mittels einer Verteilpunkt-Symmetrierglied-Einrichtung (705), Balun-Einrichtung,
   -- ein Einkoppeln der unsymmetrischen Teilnehmeranschlusssignale in das Koaxialkabel (302) in einen unteren Frequenzbereich des Gesamtfrequenzbereichs, wobei der untere Frequenzbereich dem oberen Frequenzbereich überschneidungsfrei unterlagert ist,
   -- ein Dämpfen einer Reflexion der unsymmetrische Teilnehmeranschlusssignale in dem mindestens einen Koaxialkabel (302) mittels einer Filtereinrichtung (102) sowie
   ein zweites in Richtung des Kundenendgeräte-Ausgangs (106) gerichtetes Transformieren der unsymmetrischen Teilnehmeranschlusssignale in zweite symmetrische Teilnehmeranschlusssignale mittels einer der Schnittstelle (400) zugeordneten Symmetrierglied-Einrichtung, Balun-Einrichtung, (104),
   -- ein separates Zurverfügungstellen der zweiten symmetrischen Teilnehmeranschlusssignale an dem Kundenendgeräte-Ausgang (106),
   **dadurch gekennzeichnet, dass**
   eine Anpassung der Eingangsimpedanz der Filtereinrichtung (102) hinsichtlich Reflexionen aus Richtung des Kundenendgeräte-Ausgangs (106) erfolgt.

2. Verfahren nach Anspruch 1, **dadurch gekennzeichnet, dass** die der Schnittstelle (400) zugeordnete Symmetrierglied-Einrichtung (104) eine Drosseleinrichtung (108) und eine Transformatoreinrichtung (110) aufweist, wobei in Richtung des Kundenendgeräte-Ausgangs (106) insbesondere zunächst die Drosseleinrichtung (108) und anschließend die Transformatoreinrichtung (110) durchlaufen wird, wobei die Anpassung der Eingangsimpedanz der Filtereinrichtung (102) durch eine Kompensationskapazität ($C_K$) zwischen der Filtereinrichtung (102) und der der Schnittstelle (400) zugeordneten Symmetrierglied-Einrichtung (104) vorgenommen wird, wobei die Kompensationskapazität ($C_K$) insbesondere zwischen der Filtereinrichtung (102) und der Drosseleinrichtung (108) angeordnet ist.

3. Verfahren nach einem der vorherigen Ansprüche, **dadurch gekennzeichnet, dass** die Anpassung der Eingangsimpedanz der Filtereinrichtung (102) durch Impedanztransformation dadurch realisiert wird, dass für die Realisierung der Drosseleinrichtung (108) Doppelleitungen mit einem vom Wellenwiderstand des Koaxialkabels (302) verschiedenen Wellenwiderstand verwendet werden, wobei die Impedanztransformation aufgrund einer geringen Länge der Doppelleitungen realisiert wird, wobei insbesondere Doppelleitungen mit einem Wellenwiderstand im Bereich von zwischen 45 $\Omega$ bis 65 $\Omega$, bevorzugt von zwischen 50 $\Omega$ und 60 $\Omega$, insbesondere 55 $\Omega$ verwendet werden.

4. Verfahren nach einem der vorherigen Ansprüche, **dadurch gekennzeichnet, dass** die Impedanz-Kompensation - insbesondere zusätzlich zur Kompensationskapazität ($C_K$) - mittels der Drosseleinrichtung (108) und der Transformatoreinrichtung (110) vorgenommen wird, wobei die Drosseleinrichtung (108) einen Ringkern und eine Induktivität pro Windung von zwischen 1,0 $\mu$H und 1,2 $\mu$H, insbesondere etwa 1,1 $\mu$H, aufweist und wobei insbesondere der Ringkern mit Draht in Form einer Doppelleitung umwickelt ist, wobei der Draht insbesondere ein mehrfach isolierter Draht ist und insbesondere einen Wellenwiderstand von zwischen 65 $\Omega$ und 85 $\Omega$, bevorzugt von zwischen 70 $\Omega$ bis 80 $\Omega$, insbesondere von etwa 75 $\Omega$, aufweist.

5. Verfahren nach einem der vorherigen Ansprüche, **dadurch gekennzeichnet, dass** die Transformatoreinrichtung (110) dazu ausgebildet ist, Impedanzen in einem Bereich von zwischen 65 $\Omega$ und 85 $\Omega$, bevorzugt von zwischen 70 $\Omega$ bis 80 $\Omega$, insbesondere von etwa 75 $\Omega$ in eine Impedanz von zwischen 95 $\Omega$ und 105 $\Omega$, insbesondere 100 $\Omega$, zu transformieren.

6. Verfahren nach einem der vorherigen Ansprüche, **dadurch gekennzeichnet, dass** die Drosseleinrichtung (108) eine Gleichtaktdrossel, Common Mode Choke, ist, wobei die Drosseleinrichtung (108) insbesondere 10 Windungen und eine Common-Mode Induktivität von 110 $\mu$H aufweist und/oder wobei die Transformatoreinrichtung (110) Haupt-

induktivitäten von 263 μH auf der 75 Ω-Seite und von 353 μH auf der 100 Ω-Seite aufweist.

7. Verfahren nach einem der vorherigen Ansprüche, **dadurch gekennzeichnet, dass** für eine Mehrzahl von Koaxialkabeln (302) das erste, in Richtung des Kundenendgeräte-Ausgangs (106) gerichtete, Transformieren eine Umwandlung einer Mehrzahl von symmetrischen (balanced) digitalen Teilnehmeranschlusssignalen in eine Mehrzahl von unsymmetrischen (unbalanced) digitalen DSL-Signalen umfasst, wobei die an der Verteilpunkteinheit (700) lokalisierte Verteilpunkt-Symmetrierglied-Einrichtung (705) eine Multi-Symmetrierglied-Einheit ist, wobei insbesondere die Mehrzahl der symmetrischen digitalen Teilnehmeranschlusssignale eine Impedanz in einem ersten Impedanzbereich und die Mehrzahl von unsymmetrischen digitalen Teilnehmeranschlusssignalen eine Impedanz in einem zweiten Impedanzbereich aufweist und/oder

dass das zweite in Richtung des Kundenendgeräte-Ausgangs (106) gerichtete Transformieren eine Umwandlung der unsymmetrischen (unbalanced) digitalen Teilnehmeranschlusssignale mit einer Impedanz im zweiten Impedanzbereich in zweite symmetrische (balanced) Teilnehmeranschlusssignale mit einer Impedanz im ersten Impedanzbereich bewirkt, insbesondere in einem Frequenzbereich zwischen 1 MHz und 222 MHz, bevorzugt zwischen 2 MHz und 212 MHz, oder in einem Frequenzbereich zwischen 1 MHz und 444 MHz, bevorzugt zwischen 2 MHz und 424 MHz, wobei der erste Impedanzbereich im Bereich zwischen 95 Ω und 105 Ω, insbesondere 100 Ω, liegt und der zweite Impedanzbereich im Bereich zwischen 70 Ω und 80 Ω, insbesondere 75 Ω, liegt.

8. Verfahren nach einem der vorherigen Ansprüche, **dadurch gekennzeichnet, dass** das Einkoppeln der unsymmetrischen Teilnehmeranschlusssignale in das Koaxialkabel (302) mit einer Impedanz im zweiten Impedanzbereich mittels 75 Ω TV 2-fach-Koppler erfolgt, wobei das Koaxialkabel (302) insbesondere Teil einer koaxialen TV Sternstruktur, insbesondere eines Gebäudes, ist.

9. Verfahren nach einem der vorherigen Ansprüche, **dadurch gekennzeichnet, dass** der untere Frequenzbereich Teilnehmeranschlusssignale bis annähernd 212 MHz umfasst und/oder der obere Frequenzbereich die TV-Signale oberhalb von annähernd 262 MHz umfasst oder dass der untere Frequenzbereich Teilnehmeranschlusssignale bis annähernd 424 MHz umfasst und/oder der obere Frequenzbereich die TV-Signale oberhalb von annähernd 524 MHz umfasst.

10. Verfahren nach einem der vorherigen Ansprüche, **dadurch gekennzeichnet, dass** am Kundenendgeräte-Ausgang (106) der Schnittstelle (400) eine Eingangs-Reflexionsdämpfung bis mindestens 350 MHz, bevorzugt bis mindestens 370 MHz, von größer oder gleich 22 dB, insbesondere von größer oder gleich 26 dB, insbesondere von größer oder gleich 30 dB, realisiert wird.

11. Verfahren nach einem der vorherigen Ansprüche, **dadurch gekennzeichnet, dass** die der Schnittstelle (400) zugeordnete Symmetrierglied-Einrichtung (104) eine Unsymmetriedämpfung, Transverse-Conversion-Loss, von wenigstens 25 dB zwischen 2 MHz und 1 GHz realisiert und/oder dass die der Schnittstelle (400) zugeordnete Symmetrierglied-Einrichtung (104) eine S21-Dämpfung, Vorwärts-Transmissionsfaktor, von kleiner als 4 dB zwischen 2 MHz und 1 GHz realisiert und insbesondere eine Dämpfung von kleiner als 1,1 dB zwischen 2 MHz und 424 MHz realisiert.

12. System zur Übertragung digitaler Teilnehmeranschlusssignale über ein Koaxialkabel (302) an eine Schnittstelle (400) eines Endnutzers, wobei das Koaxialkabel (302) einen Gesamtfrequenzbereich aufweist, welcher dazu ausgebildet ist, TV-Signale in einem oberen Frequenzbereich des Gesamtfrequenzbereichs an die Schnittstelle (400) des Endnutzers zu übertragen, wobei die Schnittstelle (400) einen Kundenendgeräte-Ausgang (106) umfasst, wobei das System wenigstens eine Verteilpunkteinheit, distribution point unit, DPU (700), wenigstens das Koaxialkabel (302) und wenigstens die Schnittstelle (400) mit dem Kundenendgeräte-Ausgang (106) umfasst und wobei das System derart konfiguriert ist, um:

-- ein Zurverfügungstellen von ersten symmetrischen (balanced) Teilnehmeranschlusssignalen durch eine Verteilpunkteinheit, distribution point unit, DPU, (700) an das Koaxialkabel (302) mit einem ersten, in Richtung des Kundenendgeräte-Ausgangs (106) gerichteten, Transformieren der ersten symmetrischen Teilnehmeranschlusssignale in unsymmetrische (unbalanced) Teilnehmeranschlusssignale mittels einer Verteilpunkt-Symmetrierglied-Einrichtung (705), Balun-Einrichtung,

-- ein Einkoppeln der unsymmetrischen Teilnehmeranschlusssignale in das Koaxialkabel (302) in einen unteren Frequenzbereich des Gesamtfrequenzbereichs, wobei der untere Frequenzbereich dem oberen Frequenzbereich überschneidungsfrei unterlagert ist,

-- ein Dämpfen einer Reflexion der unsymmetrische Teilnehmeranschlusssignale in dem mindestens einen Koaxialkabel (302) mittels einer Filtereinrichtung (102) sowie
ein zweites in Richtung des Kundenendgeräte-Ausgangs (106) gerichtetes Transformieren der unsymmetrischen Teilnehmeranschlusssignale in zweite symmetrische Teilnehmeranschlusssignale mittels einer der Schnittstelle (400) zugeordneten Symmetrierglied-Einrichtung, Balun-Einrichtung, (104), und
-- ein separates Zurverfügungstellen der zweiten symmetrischen Teilnehmeranschlusssignale an dem Kundenendgeräte-Ausgang (106) zu realisieren,
**dadurch gekennzeichnet, dass** eine Anpassung der Eingangsimpedanz der Filtereinrichtung (102) hinsichtlich Reflexionen aus Richtung des Kundenendgeräte-Ausgangs (106) erfolgt.

13. Schnittstelle (400) eines Endnutzers, insbesondere als Teil eines Systems nach Anspruch 12 und zur Nutzung in einem Verfahren nach einem der Ansprüche 1 bis 11, zur Übertragung digitaler Teilnehmeranschlusssignale über ein Koaxialkabel (302) an die Schnittstelle (400), wobei das Koaxialkabel (302) einen Gesamtfrequenzbereich aufweist, welcher dazu ausgebildet ist, TV-Signale in einem oberen Frequenzbereich des Gesamtfrequenzbereichs an die Schnittstelle (400) des Endnutzers zu übertragen, wobei die Schnittstelle (400) einen Kundenendgeräte-Ausgang (106) umfasst, wobei die Schnittstelle (400) derart konfiguriert ist, um hinsichtlich unsymmetrischen, in einem dem oberen Frequenzbereich überschneidungsfrei unterlagerten unteren Frequenzbereich des Gesamtfrequenzbereichs befindlichen und in das Koaxialkanel (302) eingekoppelten Teilnehmeranschlusssignale:

-- ein Dämpfen einer Reflexion der unsymmetrische Teilnehmeranschlusssignale in dem mindestens einen Koaxialkabel (302) mittels einer Filtereinrichtung (102) sowie
ein zweites in Richtung des Kundenendgeräte-Ausgangs (106) gerichtetes Transformieren der unsymmetrischen Teilnehmeranschlusssignale in zweite symmetrische Teilnehmeranschlusssignale mittels einer der Schnittstelle (400) zugeordneten Symmetrierglied-Einrichtung, Balun-Einrichtung, (104), und
-- ein separates Zurverfügungstellen der zweiten symmetrischen Teilnehmeranschlusssignale an dem Kundenendgeräte-Ausgang (106) zu realisieren,
wobei die Schnittstelle (400) neben einem TV-Ausgang (306) den Kundenendgeräte-Ausgang (106) aufweist und dazu ausgebildet ist, TV-Signale im oberen Frequenzbereich am TV-Ausgang (306) zur Verfügung zu stellen und symmetrische Teilnehmeranschlusssignale am Kundenendgeräte-Ausgang (106) im unteren Frequenzbereich zur Verfügung zu stellen,
**dadurch gekennzeichnet, dass**
eine Anpassung der Eingangsimpedanz der Filtereinrichtung (102) hinsichtlich Reflexionen aus Richtung des Kundenendgeräte-Ausgangs (106) erfolgt.

## Claims

1. Method for transmitting digital subscriber connection signals to an end user interface (400) via a coaxial cable (302), the coaxial cable (302) having an overall frequency range configured to transmit TV signals to the end user interface (400) in an upper frequency range of the overall frequency range, the interface (400) comprising a customer terminal output (106), the method comprising the following steps:

- supplying first symmetrical (balanced) subscriber connection signals to the coaxial cable (302) by way of a distribution point unit (DPU) (700) with a first transformation, directed towards the customer terminal output (106), of the first symmetrical subscriber connection signals into asymmetrical (unbalanced) subscriber connection signals by means of a distribution point balun device (705),
- feeding the asymmetrical subscriber connection signals into the coaxial cable (302) in a lower frequency range of the overall frequency range, the lower frequency range being located below the upper frequency range without any overlap ,
- attenuating a reflection of the asymmetrical subscriber connection signals in the at least one coaxial cable (302) by means of a filter device (102), and

performing a second transformation, directed towards the customer terminal output (106), of the asymmetrical subscriber connection signals into second symmetrical subscriber connection signals by means of a balun device (104) assigned to the interface (400),

- supplying the second symmetrical subscriber connection signals to the customer terminal output (106) separately,

**characterised in that**
the input impedance of the filter device (102) is adjusted in relation to reflections from the customer terminal output (106).

2. Method according to claim 1, **characterised in that** the balun device (104) assigned to the interface (400) has a choke device (108) and a transformer device (110), in particular the choke device (108) initially and the transformer device (110) subsequently being passed through towards the customer terminal output (106), the adaptation of the input impedance of the filter device (102) being carried out by a compensation capacitor ($C_K$) between the filter device (102) and the balun device (104) assigned to the interface (400), the compensation capacitor ($C_K$) being arranged in particular between the filter device (102) and the choke device (108).

3. Method according to any of the preceding claims, **characterised in that** the adaptation of the input impedance of the filter device (102) is implemented by impedance transformation, **in that** double lines having a wave resistance differing from the wave resistance of the coaxial cable (302) are used for implementing the choke device (108), the impedance transformation being implemented on the basis of a low length of the double lines, in particular double lines having a wave resistance in the range of between 45 Ω and 65 Ω, preferably between 50 Ω and 60 Ω, in particular 55 Ω, being used.

4. Method according to any of the preceding claims, **characterised in that** the impedance compensation is carried out by means of the choke device (108) and the transformer device (110), in particular in addition to the compensation capacitor ($C_K$), the choke device (108) having an annular core and an inductance per winding of between 1.0 μH and 1.2 μH, in particular approximately 1.1 μH, and in particular the annular core being wound around by wire in the form of a double line, the wire in particular being a multiply insulated wire and in particular having a wave resistance of between 65 Ω and 85 Ω, preferably of between 70 Ω and 80 Ω, in particular of approximately 75 Ω.

5. Method according to any of the preceding claims, **characterised in that** the transformer device (110) is formed to transform impedances in a range of between 65 Ω and 85 Ω, preferably of between 70 Ω and 80 Ω, in particular of approximately 75 Ω, into an impedance of between 95 Ω and 105 Ω, in particular 100 Ω.

6. Method according to any of the preceding claims, **characterised in that** the choke device (108) is a common mode choke, the choke device (108) in particular having 10 windings and a common mode inductance of 110 μH and/or the transformer device (110) having main inductances of 263 μH on the 75 Ω side and 353 μH on the 100 Ω side.

7. Method according to any of the preceding claims, **characterised in that**, for a plurality of coaxial cables (302), the first transformation, directed towards the customer terminal output (106), comprises converting a plurality of symmetrical (balanced) digital subscriber connection signals into a plurality of asymmetrical (unbalanced) digital DSL signals, the distribution point balun device (705) localised at the distribution point unit (700) being a multi-balun unit, in particular the plurality of symmetrical digital subscriber connection signals having an impedance in a first impedance range and the plurality of asymmetrical digital subscriber connection signals having an impedance in a second impedance range, and/or in that the second transformation, directed towards the customer terminal output (106), brings about a conversion of the asymmetrical (unbalanced) digital subscriber connection signals having an impedance in the second impedance range into second symmetrical (balanced) subscriber connection signals having an impedance in the first impedance range, in particular in a frequency range between 1 MHz and 222 MHz, preferably between 2 MHz and 212 MHz, or in a frequency range between 1 MHz and 444 MHz, preferably between 2 MHz and 424 MHz, the first impedance range being in the range between 95 Ω and 105 Ω, in particular 100 Ω, and the second impedance being in the range between 70 Ω and 80 Ω, in particular 75 Ω.

8. Method according to any of the preceding claims, **characterised in that** the asymmetrical subscriber connection signals are fed into the coaxial cable (302) with an impedance in the second impedance range by means of 75 Ω TV 2-way couplers, the coaxial cable (302) in particular being part of a coaxial TV star structure, in particular of a building.

9. Method according to any of the preceding claims, **characterised in that** the lower frequency range comprises subscriber connection signals up to approximately 212 MHz and/or the upper frequency range comprises the TV signals above approximately 262 MHz, or **in that** the lower frequency range comprises subscriber connection signals up to approximately 424 MHz and/or the upper frequency range comprises the TV signals above approximately 524 MHz.

10. Method according to any of the preceding claims, **characterised in that**, at the customer terminal output (106) of the interface (400), input reflection attenuation of greater than or equal to 22 dB, in particular of greater than or equal to 26 dB, in particular of greater than or equal to 30 dB, is performed up to at least 350 MHz, preferably up to at least 370 MHz.

11. Method according to any of the preceding claims, **characterised in that** the balun device (104) assigned to the interface (400) implements asymmetry attenuation, transverse conversion loss, of at least 25 dB between 2 MHz and 1 GHz and/or **in that** the balun device (104) assigned to the interface (400) implements an S21 attenuation, forward transmission factor, of less than 4 dB between 2 MHz and 1 GHz and in particular an attenuation of less than 1.1 dB between 2 MHz and 424 MHz.

12. System for transmitting digital subscriber connection signals via a coaxial cable (302) to an end user interface (400), the coaxial cable (302) having an overall frequency range configured to transmit TV signals to the end user interface (400) in an upper frequency range of the overall frequency range, the interface (400) comprising a customer terminal output (106), the system comprising at least one distribution point unit (DPU) (700), at least the coaxial cable (302), and at least the interface (400) having the customer terminal output (106), and the system being configured:

- to supply first symmetrical (balanced) subscriber connection signals to the coaxial cable (302) by way of a distribution point unit (DPU) (700) with a first transformation, directed towards the customer terminal output (106), of the first symmetrical subscriber connection signals into asymmetrical (unbalanced) subscriber connection signals by means of a distribution point balun device (705),
- to feed the asymmetrical subscriber connection signals into the coaxial cable (302) in a lower frequency range of the overall frequency range, the lower frequency range being located below the upper frequency range without any overlap ,
- to attenuate a reflection of the asymmetrical subscriber connection signals in the at least one coaxial cable (302) by means of a filter device (102), and

to perform a second transformation, directed towards the customer terminal output (106), of the asymmetrical subscriber connection signals into second symmetrical subscriber connection signals by means of a balun device (104) assigned to the interface (400),

- to supply the second symmetrical subscriber connection signals to the customer terminal output (106) separately,

**characterised in that**
the input impedance of the filter device (102) is adjusted in relation to reflections from the customer terminal output (106).

13. End user interface (400), in particular as part of a system according to claim 12 and for use in a method according to any of claims 1 to 11, for transmitting digital subscriber connection signals to the interface (400) via a coaxial cable (302), the coaxial cable (302) having an overall frequency range configured to transmit TV signals to the end user interface (400) in an upper frequency range of the overall frequency range, the interface (400) comprising a customer terminal output (106), the interface (400) being configured, in relation to asymmetrical subscriber connection signals which are located in a lower frequency region of the overall frequency range, located below the upper frequency range without any overlap, and which are fed into the coaxial cable (302):

- to attenuate a reflection of the asymmetrical subscriber connection signals in the at least one coaxial cable (302) by means of a filter device (102), and
to perform a second transformation, directed towards the customer terminal output (106), of the asymmetrical subscriber connection signals into second symmetrical subscriber connection signals by means of a balun device (104) assigned to the interface (400),

- to supply the second symmetrical subscriber connection signals to the customer terminal output (106) separately,

the interface (400) having the customer terminal output (106) as well as a TV output (306) and being configured to supply TV signals in the upper frequency range at the TV output (306) and symmetrical subscriber connection signals in the lower frequency range at the customer terminal output (106),

**characterised in that**
the input impedance of the filter device (102) is adjusted in relation to reflections from the customer terminal output (106).

**Revendications**

1.  Procédé de transmission de signaux de raccordement d'abonné numériques par l'intermédiaire d'un câble coaxial (302) à une interface (400) d'un utilisateur final, le câble coaxial (302) présentant une plage de fréquences totale conçue pour transmettre des signaux TV dans une plage de fréquences supérieure de la plage de fréquences totale à l'interface (400) de l'utilisateur final, l'interface (400) comprenant une sortie de terminal client (106), le procédé comprenant :

    - une mise à disposition de premiers signaux de raccordement d'abonné symétriques (balanced) par une unité de point de distribution (DPU : distribution point unit) (700) au câble coaxial (302) avec une première transformation, orientée en direction de la sortie de terminal client (106), des premiers signaux de raccordement d'abonné symétriques en signaux de raccordement d'abonné asymétriques (unbalanced) au moyen d'un dispositif symétriseur de point de distribution (705), ou dispositif balun,
    - une injection des signaux de raccordement d'abonné asymétriques dans le câble coaxial (302) dans une plage de fréquences inférieure de la plage de fréquences totale, la plage de fréquences inférieure étant subordonnée sans chevauchement à la plage de fréquences supérieure,
    - une atténuation d'une réflexion des signaux de raccordement d'abonné asymétriques dans ledit au moins un câble coaxial (302) au moyen d'un dispositif de filtrage (102) ainsi

    qu'une deuxième transformation, orientée en direction de la sortie de terminal client (106), des signaux de raccordement d'abonné asymétriques en deuxièmes signaux de raccordement d'abonné symétriques au moyen d'un dispositif symétriseur, ou dispositif balun, (104) associé à l'interface (400),

    - une mise à disposition séparée des deuxièmes signaux de raccordement d'abonné symétriques à la sortie de terminal client (106),

    **caractérisé en ce**
    **qu'**une adaptation de l'impédance d'entrée du dispositif de filtrage (102) est effectuée en ce qui concerne les réflexions à partir de la direction de la sortie de terminal client (106).

2.  Procédé selon la revendication 1, **caractérisé en ce que** le dispositif symétriseur (104) associé à l'interface (400) présente un dispositif de réactance (108) et un dispositif de transformation (110), en particulier d'abord le dispositif de réactance (108) et ensuite le dispositif de transformation (110) étant traversés en direction de la sortie de terminal client (106), l'adaptation de l'impédance d'entrée du dispositif de filtrage (102) étant effectuée par une capacité de compensation ($C_K$) entre le dispositif de filtrage (102) et le dispositif symétriseur (104) associé à l'interface (400), la capacité de compensation ($C_K$) étant en particulier disposée entre le dispositif de filtrage (102) et le dispositif de réactance (108).

3.  Procédé selon l'une des revendications précédentes, **caractérisé en ce que** l'adaptation de l'impédance d'entrée du dispositif de filtrage (102) est réalisée par transformation d'impédance en utilisant, pour la réalisation du dispositif de réactance (108), des lignes doubles ayant une impédance caractéristique différente de l'impédance caractéristique du câble coaxial (302), la transformation d'impédance étant réalisée en raison d'une faible longueur des lignes doubles, des lignes doubles ayant une impédance caractéristique dans la plage comprise entre 45 $\Omega$ et 65 $\Omega$, de préférence entre 50 $\Omega$ et 60 $\Omega$, en particulier de 55 $\Omega$, étant en particulier utilisées.

4.  Procédé selon l'une des revendications précédentes, **caractérisé en ce que** la compensation d'impédance - en particulier en plus de la capacité de compensation ($C_K$) - est effectuée au moyen du dispositif de réactance (108) et du dispositif de transformation (110), le dispositif de réactance (108) présentant un noyau annulaire et une inductance par spire comprise entre 1,0 $\mu$H et 1,2 $\mu$H, en particulier d'environ 1,1 $\mu$H, et, en particulier, le noyau annulaire étant entouré d'un fil sous la forme d'une ligne double, le fil étant en particulier un fil à isolation multiple et présentant en particulier une impédance caractéristique comprise entre 65 $\Omega$ et 85 $\Omega$, de préférence entre 70 $\Omega$ et 80 $\Omega$, en particulier d'environ 75 $\Omega$.

**5.** Procédé selon l'une des revendications précédentes, **caractérisé en ce que** le dispositif de transformation (110) est conçu pour transformer des impédances dans une plage comprise entre 65 Ω et 85 Ω, de préférence entre 70 Ω et 80 Ω, en particulier d'environ 75 Ω, en une impédance comprise entre 95 Ω et 105 Ω, en particulier de 100 Ω.

**6.** Procédé selon l'une des revendications précédentes, **caractérisé en ce que** le dispositif de réactance (108) est une self de mode commun (common mode choke), le dispositif de réactance (108) présentant en particulier 10 spires et une inductance de mode commun de 110 μH et/ou le dispositif de transformation (110) présentant des inductances principales de 263 μH du côté 75 Ω et de 353 μH du côté 100 Ω.

**7.** Procédé selon l'une des revendications précédentes, **caractérisé en ce que**, pour une pluralité de câbles coaxiaux (302), la première transformation, orientée en direction de la sortie de terminal client (106), comprend une conversion d'une pluralité de signaux de raccordement d'abonné numériques symétriques (balanced) en une pluralité de signaux DSL numériques asymétriques (unbalanced), le dispositif symétriseur de point de distribution (705) localisé sur l'unité de point de distribution (700) étant une unité de symétrisation multiple, en particulier la pluralité de signaux de raccordement d'abonné numériques symétriques présentant une impédance dans une première plage d'impédance et la pluralité de signaux de raccordement d'abonné numériques asymétriques une impédance dans une deuxième plage d'impédance et/ou en ce que la deuxième transformation, orientée en direction de la sortie de terminal client (106), provoque une conversion des signaux de raccordement d'abonné numériques asymétriques (unbalanced) ayant une impédance dans la deuxième plage d'impédance en deuxièmes signaux de raccordement d'abonné symétriques (balanced) ayant une impédance dans la première plage d'impédance, en particulier dans une plage de fréquences comprise entre 1 MHz et 222 MHz, de préférence entre 2 MHz et 212 MHz, ou dans une plage de fréquences comprise entre 1 MHz et 444 MHz, de préférence entre 2 MHz et 424 MHz, la première plage d'impédance se situant dans la plage comprise entre 95 Ω et 105 Ω, en particulier de 100 Ω, et la deuxième plage d'impédance se situant dans la plage comprise entre 70 Ω et 80 Ω, en particulier de 75 Ω.

**8.** Procédé selon l'une des revendications précédentes, **caractérisé en ce que** l'injection des signaux de raccordement d'abonné asymétriques dans le câble coaxial (302) ayant une impédance dans la deuxième plage d'impédance est effectué au moyen d'un coupleur double TV 75 Ω, le câble coaxial (302) faisant en particulier partie d'une structure coaxiale TV en étoile, en particulier d'un bâtiment.

**9.** Procédé selon l'une des revendications précédentes, **caractérisé en ce que** la plage de fréquences inférieure comprend des signaux de raccordement d'abonné jusqu'à approximativement 212 MHz et/ou la plage de fréquences supérieure comprend les signaux TV au-dessus d'approximativement 262 MHz ou **en ce que** la plage de fréquences inférieure comprend des signaux de raccordement d'abonné jusqu'à approximativement 424 MHz et/ou la plage de fréquences supérieure comprend les signaux TV au-dessus d'approximativement 524 MHz.

**10.** Procédé selon l'une des revendications précédentes, **caractérisé en ce qu'**une atténuation des réflexions d'entrée jusqu'à au moins 350 MHz, de préférence jusqu'à au moins 370 MHz, supérieure ou égale à 22 dB, en particulier supérieure ou égale à 26 dB, en particulier supérieure ou égale à 30 dB est réalisée à la sortie de terminal client (106) de l'interface (400).

**11.** Procédé selon l'une des revendications précédentes, **caractérisé en ce que** le dispositif symétriseur (104) associé à l'interface (400) réalise une atténuation d'asymétrie (transverse conversion loss) d'au moins 25 dB entre 2 MHz et 1 GHz et/ou **en ce que** le dispositif symétriseur (104) associé à l'interface (400) réalise une atténuation S21, coefficient de transmission directe, inférieure à 4 dB entre 2 MHz et 1 GHz et en particulier une atténuation inférieure à 1,1 dB entre 2 MHz et 424 MHz.

**12.** Système de transmission de signaux de raccordement d'abonné numériques par l'intermédiaire d'un câble coaxial (302) à une interface (400) d'un utilisateur final, le câble coaxial (302) présentant une plage de fréquences totale conçue pour transmettre des signaux TV dans une plage de fréquences supérieure de la plage de fréquences totale à l'interface (400) de l'utilisateur final, l'interface (400) comprenant une sortie de terminal client (106), le système comprenant au moins une unité de point de distribution (DPU : distribution point unit) (700), au moins le câble coaxial (302) et au moins l'interface (400) avec la sortie de terminal client (106), et le système étant configuré pour réaliser :

    - une mise à disposition de premiers signaux de raccordement d'abonné symétriques (balanced) par une unité de point de distribution (DPU : distribution point unit) (700) au câble coaxial (302) avec une première transformation, orientée en direction de la sortie de terminal client (106), des premiers signaux de raccordement d'abonné symétriques en signaux de raccordement d'abonné asymétriques (unbalanced) au moyen d'un dispositif symétriseur de point de distribution (705), ou dispositif balun,
- une injection des signaux de raccordement d'abonné asymétriques dans le câble coaxial (302) dans une plage de fréquences inférieure de la plage de fréquences totale, la plage de fréquences inférieure étant subordonnée sans chevauchement à la plage de fréquences supérieure,
- une atténuation d'une réflexion des signaux de raccordement d'abonné asymétriques dans ledit au moins un câble coaxial (302) au moyen d'un dispositif de filtrage (102) ainsi

qu'une deuxième transformation, orientée en direction de la sortie de terminal client (106), des signaux de raccordement d'abonné asymétriques en deuxièmes signaux de raccordement d'abonné symétriques au moyen d'un dispositif symétriseur, ou dispositif balun, (104) associé à l'interface (400),

- une mise à disposition séparée des deuxièmes signaux de raccordement d'abonné symétriques à la sortie de terminal client (106),

**caractérisé en ce**
**qu'**une adaptation de l'impédance d'entrée du dispositif de filtrage (102) est effectuée en ce qui concerne les réflexions à partir de la direction de la sortie de terminal client (106).

13. Interface (400) d'un utilisateur final, en particulier faisant partie d'un système selon la revendication 12 et pour une utilisation dans un procédé selon l'une des revendications 1 à 11, pour la transmission de signaux de raccordement d'abonné numériques par l'intermédiaire d'un câble coaxial (302) à l'interface (400), le câble coaxial (302) présentant une plage de fréquences totale conçue pour transmettre des signaux TV dans une plage de fréquences supérieure de la plage de fréquences totale à l'interface (400) de l'utilisateur final, l'interface (400) comprenant une sortie de terminal client (106), l'interface (400) étant configurée pour réaliser, en ce qui concerne des signaux de raccordement d'abonné asymétriques se trouvant dans une plage de fréquences inférieure de la plage de fréquences totale subordonnée sans chevauchement à la plage de fréquences supérieure et injectés dans le câble coaxial (302) :

- une atténuation d'une réflexion des signaux de raccordement d'abonné asymétriques dans ledit au moins un câble coaxial (302) au moyen d'un dispositif de filtrage (102) ainsi
qu'une deuxième transformation, orientée en direction de la sortie de terminal client (106), des signaux de raccordement d'abonné asymétriques en deuxièmes signaux de raccordement d'abonné symétriques au moyen d'un dispositif symétriseur, ou dispositif balun, (104) associé à l'interface (400), et

- une mise à disposition séparée des deuxièmes signaux de raccordement d'abonné symétriques à la sortie de terminal client (106),

l'interface (400) présentant, outre une sortie TV (306), la sortie de terminal client (106) et étant conçue pour mettre à disposition des signaux TV dans la plage de fréquences supérieure à la sortie TV (306) et pour mettre à disposition des signaux de raccordement d'abonné symétriques à la sortie de terminal client (106) dans la plage de fréquences inférieure,
**caractérisée en ce**
**qu'**une adaptation de l'impédance d'entrée du dispositif de filtrage (102) est effectuée en ce qui concerne les réflexions à partir de la direction de la sortie de terminal client (106).

**Fig. 1**

**Fig. 2**

**Fig. 3**

a(f), ar(f) am G.fast Port,ohne Ckomp

Fig. 4

Fig. 5

a(f), ar(f) am G.fast Port, mit Ckomp

Fig. 6

EP 3 993 323 B1

108'''    108    109''
              109'

108''    108'    108'    109

**Fig. 7**

110''    110

110'

110''    111'    111''    111''''

110''

110'    110

109

**Fig. 8**

Zielkurve MMD Balun 75:100 Ω, 2-stufig mit Doppellochkern-Transformator und Ringkern-Gleichtaktdrossel
Übertragungsfunktion: -3 dB Punkt bei 900 MHz; Zielkurve bis 424 MHz maßgebend

Frequenz in MHz

-S21 = Dämpfung in dB

log Balun/Trafo Ü-Funktion infolge der Streuinduktivität incl. ohmscher und magnetischer Verluste

Fig. 9

Fig. 10 a)

Zielkurven MMD Tiefpass, Hochpass bei G.fast 424 MHz (incl. Balun Ü-Funktion)
Dämpfungswerte bei 65 dB und 90 dB sind Mindestwerte

TP Filter +Balun Differential Mode G.fast Port
HP Filter F-Buchse
TCL/Common Mode Kopplung linear

-S21 = Dämpfung in dB

Frequenz in MHz

Fig. 10 b)

EP 3 993 323 B1

Zielkurven MMD Tiefpass, Hochpass bei G.fast 212 MHz (incl. Balun)
Reflexionsdämpfungen Mindestwerte: TP 22 dB bis 186 MHz; HP 11 dB ab 262 MHz

Reflexionsdämpfung Tiefpass: G.fast Port, IN-Port

Reflexionsdämpfung Hochpass: IN-Port, Out-Port, TV-Buchse

-S11 = Dämpfung in dB

Frequenz in MHz

EP 3 993 323 B1

Fig. 10 c)

Fig. 10 d)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2945360 A1
- WO 0143324 A1